(19) Europäisches Patentamt / European Patent Office / Office européen des brevets

(11) **EP 4 375 724 A1**

(12) **EUROPEAN PATENT APPLICATION**
published in accordance with Art. 153(4) EPC

(43) Date of publication:
**29.05.2024 Bulletin 2024/22**

(21) Application number: **22845724.8**

(22) Date of filing: **20.06.2022**

(51) International Patent Classification (IPC):
**G02B 21/02** (2006.01)    **G01N 15/14** (2006.01)
**G02B 13/18** (2006.01)

(52) Cooperative Patent Classification (CPC):
**G01N 15/14; G02B 13/18; G02B 21/02**

(86) International application number:
**PCT/JP2022/024507**

(87) International publication number:
**WO 2023/002788 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.07.2021 US 202163224125 P**

(71) Applicant: **Sony Group Corporation
Tokyo 108-0075 (JP)**

(72) Inventors:
• **NONAKA, Masanobu
Tokyo 108-0075 (JP)**
• **NAGAE, Satoshi
Tokyo 108-0075 (JP)**
• **HATAKEYAMA, Takeshi
Tokyo 108-0075 (JP)**

(74) Representative: **D Young & Co LLP
3 Noble Street
London EC2V 7BQ (GB)**

(54) **OBJECTIVE LENS AND SAMPLE ANALYSIS DEVICE**

(57) Provided is an objective lens (300) used in a sample analyzer (100) for detecting light in a plurality of wavelength bands from particles (P) flowing through a flow channel (C). The objective lens is provided in proximity to the flow channel, and has a ratio of a converted optical path length L to a focal length f of the objective lens in a dry system satisfying Mathematical Expression (1) below, where the converted optical path length L denotes a distance from a lens surface on a flow channel side to a center of the flow channel converted into a distance in the dry system.

$$0.15 \leq L/f \leq 0.45 \qquad \cdots (1)$$

FIG.3

EP 4 375 724 A1

**Description**

Field

The present disclosure relates to an objective lens and a sample analyzer.

Background

In recent years, with the development of analysis methods, for example, an analyzer capable of analyzing fine particles or sorting the fine particles based on an analysis result in the process of causing biological fine particles, such as cells and microorganisms, and fine particles such as microbeads to flow through a flow channel has been proposed. As an example of the analysis of fine particles or sorting technique, there is an analysis technique called flow cytometry. In the flow cytometry, fine particles to be analyzed are caused to flow through a flow channel in a state of being aligned in a fluid, and the flowing fine particles are irradiated with laser light or the like to detect fluorescence or scattered light emitted from each fine particle. In addition, in the flow cytometry, fluorescence or scattered light emitted from the fine particle is detected by an optical mechanism, and features of the fine particle are extracted by an analysis computer from the detected optical information to perform analysis.

Furthermore, in recent years, as a request from basic medicine and clinical fields, an analyzer capable of performing multicolor analysis for detecting light of a plurality of different wavelengths to perform analysis is strongly demanded for an analyzer used for the flow cytometry or the like. As an apparatus capable of the multicolor analysis, a spectral sample analyzer (flow cytometer) has been drawing attention. The spectral sample analyzer is equipped with a light detector that detects light in a plurality of different wavelength ranges, and can detect, for example, fluorescence in a wide wavelength range.

Citation List

Patent Literature

Patent Literature 1: JP 2005-501290 A

Summary

Technical Problem

A sample analyzer is provided with a detection optical system that guides light emitted from a fine particle to a light detector, and the detection optical system includes an objective lens provided close to a flow channel. Since the objective lens is required to guide the light emitted from the fine particle flowing through a flow channel to the light detector and to secure rigidity in consideration of external vibration and an external load of the flow channel, it is required to set a suitable distance between the objective lens and the flow channel. In addition, it is required to reduce the size of the objective lens in order to avoid an increase in size of the sample analyzer. Furthermore, to detect a wide wavelength range by the sample analyzer, it is difficult to suitably detect light in a wide wavelength range in the prior art due to a limit in improvement of aberration of the objective lens.

In addition, to detect light in a wide wavelength range by the sample analyzer, various optical components are required to be arranged in the detection optical system. However, in the prior art, it is difficult to secure a space for arranging various optical components, or arrangement of various optical components is limited. Furthermore, in the prior art, even when the optical components can be arranged, each optical component cannot be freely arranged, and thus it is inevitable that the sample analyzer becomes large. In addition, in the prior art, it is difficult to reduce the size of the optical components, and thus it is inevitable that the sample analyzer becomes large.

Therefore, the present disclosure proposes an objective lens and a sample analyzer capable of securing rigidity of a flow channel while supporting detection of light in a wide wavelength range, and downsizing the sample analyzer and various optical components included in the sample analyzer.

Solution to Problem

According to the present disclosure, there is provided an objective lens used in a sample analyzer that detects light in a plurality of wavelength bands from particles flowing through a flow channel. The objective lens is provided in proximity to the flow channel, and the objective lens has a ratio of a converted optical path length L to a focal length f of the objective lens in a dry system satisfying Mathematical Expression (1) below, where the converted optical path length L denotes a distance from a lens surface on a side of the flow channel to a center of the flow channel converted into a distance in the dry system:

$$0.15 \le L/f \le 0.45 \qquad \cdots (1)$$

Furthermore, according to the present disclosure, there is provided a sample analyzer including: an objective lens that condenses light generated by irradiating particles flowing through a flow channel with light; a detection unit that detects light from the objective lens; and a detection optical system that guides emission light from the objective lens to the detection unit. In the sample analyzer, the objective lens is provided in proximity to the flow channel, and the objective lens has a ratio of a converted optical path length L to a focal length f of the objective lens in a dry system satisfying Mathematical Expression (1) below, where the converted optical path length L is a distance from a lens surface on a side of the flow channel to a center of the flow channel converted into a distance in the dry system:

$$0.15 \le L/f \le 0.45 \qquad \cdots (1)$$

Brief Description of Drawings

FIG. 1 is a diagram schematically illustrating an example of an overall configuration of a sample analyzer to which an embodiment of the present disclosure is applicable.
FIG. 2 is a diagram illustrating an example of a configuration of a detection unit according to a comparative example.
FIG. 3 is a diagram (part 1) illustrating an example of a configuration of a detection unit according to the embodiment of the present disclosure.
FIG. 4 is a diagram (part 2) illustrating an example of the configuration of the detection unit according to the embodiment of the present disclosure.
FIG. 5 is data summarizing L/f values in Example 1 to 4.
FIG. 6A is a cross-sectional view of an objective lens in Example 1.
FIG. 6B is lens data of the objective lens in Example 1.
FIG. 6C is an aberration diagram of the objective lens in Example 1, and is a longitudinal aberration diagram (spherical aberration) on an object surface when reverse ray tracing that traces infinite beam entering from an image side toward an object side is performed.
FIG. 6D is an aberration diagram of the objective lens in Example 1, and is a longitudinal aberration diagram (astigmatic aberration) on the object surface when reverse ray tracing that traces the infinite beam entering from the image side toward the object side is performed.
FIG. 6E is an aberration diagram of the objective lens in Example 1, and is a longitudinal aberration diagram (distortion aberration) on the object surface when reverse ray tracing that traces the infinite beam entering from the image side toward the object side is performed.
FIG. 6F is an aberration diagram of the objective lens in Example 1, and is a lateral aberration diagram on the object surface when reverse ray tracing that traces the infinite beam entering from the image side toward the object side is performed.
FIG. 7A is a cross-sectional view of an objective lens in Example 2.
FIG. 7B is lens data of the objective lens in Example 2.
FIG. 7C is an aberration diagram of the objective lens in Example 2, and is a longitudinal aberration diagram (spherical aberration) on an object surface when reverse ray tracing that traces an infinite beam entering from an image side toward an object side is performed.
FIG. 7D is an aberration diagram of the objective lens in Example 2, and is a longitudinal aberration diagram (astigmatic aberration) on the object surface when reverse ray tracing that traces the infinite beam entering from the image side toward the object side is performed.
FIG. 7E is an aberration diagram of the objective lens in Example 2, and is a longitudinal aberration diagram (distortion aberration) on the object surface when reverse ray tracing that traces the infinite beam entering from the image side toward the object side is performed.
FIG. 7F is an aberration diagram of the objective lens in Example 2, and is a lateral aberration diagram on the object surface when reverse ray tracing that traces the infinite beam entering from the image side toward the object side is performed.
FIG. 8A is a cross-sectional view of an objective lens in Example 3.

FIG. 8B is lens data of the objective lens in Example 3.

FIG. 8C is an aberration diagram of the objective lens in Example 3, and is a longitudinal aberration diagram (spherical aberration) on the object surface when reverse ray tracing that traces an infinite beam entering from an image side toward an object side is performed.

FIG. 8D is an aberration diagram of the objective lens in Example 3, and is a longitudinal aberration diagram (astigmatic aberration) on the object surface when reverse ray tracing that traces the infinite beam entering from the image side toward the object side is performed.

FIG. 8E is an aberration diagram of the objective lens in Example 3, and is a longitudinal aberration diagram (distortion aberration) on the object surface when reverse ray tracing that traces the infinite beam entering from the image side toward the object side is performed.

FIG. 8F is an aberration diagram of the objective lens in Example 3, and is a lateral aberration diagram on the object surface when reverse ray tracing that traces the infinite beam entering from the image side toward the object side is performed.

FIG. 9A is a cross-sectional view of an objective lens in Example 4.

FIG. 9B is lens data of the objective lens in Example 4.

FIG. 9C is an aberration diagram of the objective lens in Example 4, and is a longitudinal aberration diagram (spherical aberration) on an object surface when reverse ray tracing that traces an infinite beam entering from an image side toward an object side is performed.

FIG. 9D is an aberration diagram of the objective lens in Example 4, and is a longitudinal aberration diagram (astigmatic aberration) on the object surface when reverse ray tracing that traces the infinite beam entering from the image side toward the object side is performed.

FIG. 9E is an aberration diagram of the objective lens in Example 4, and is a longitudinal aberration diagram (distortion aberration) on the object surface when reverse ray tracing that traces the infinite beam entering from the image side toward the object side is performed.

FIG. 9F is an aberration diagram of the objective lens in Example 4, and is a lateral aberration diagram on the object surface when reverse ray tracing that traces the infinite beam entering from the image side toward the object side is performed.

Description of Embodiments

Hereinafter, preferred embodiments of the present disclosure will be described in detail with reference to the accompanying drawings. Note that, in the present specification and the drawings, components having substantially the same functional configuration are denoted by the same reference signs to omit redundant description. In addition, in the present specification and the drawings, a plurality of components having substantially the same functional configurations may be distinguished by attaching a different alphabet after the same reference sign. However, when it is not particularly necessary to distinguish each of the plurality of components having substantially the same or similar functional configuration, only the same reference sign is assigned.

In addition, the drawings referred to in the following description are drawings for facilitating the description and understanding of an embodiment of the present disclosure, and shapes, dimensions, ratios, and the like illustrated in the drawings may be different from actual ones for the sake of clarity. Similarly, illustration may be partially omitted. Furthermore, configuration examples illustrated in the drawings can be appropriately modified in design in consideration of the following description and known techniques.

Note that, in the following description, a case where the embodiment of the present disclosure is applied to an analyzer (flow cytometer) that detects and analyzes fluorescence and scattered light emitted from a fine particle will be described as an example, but application of the present embodiment is not limited to the analyzer. For example, as will be described later, the embodiment of the present disclosure may be applied to a device (cell sorter) that analyzes fine particles and further sorts or counts the fine particles individually based on an analysis result.

Note that the description will be given in the following order.

1. Background to creation of embodiments of present disclosure

    1.1 Sample analyzer
    1.2 Detection unit according to comparative example
    1.3 Background

2. Embodiment of the present disclosure

    2.1 Detection unit

2.2 Objective lens

3. Examples

3.1 Example 1
3.2 Example 2
3.3 Example 3
3.4 Example 4

4. Summary
5. Supplement

<<1. Background to creation of embodiments of present disclosure>>

<1.1 Sample analyzer>

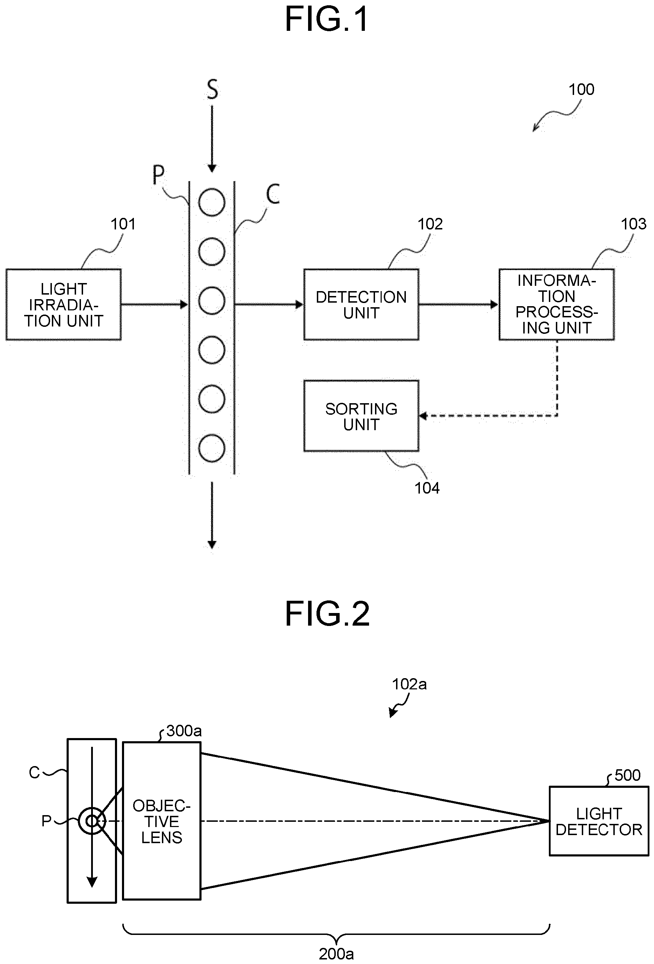

First, before describing an embodiment according to the present disclosure, the background to the creation of the embodiments according to the present disclosure by the inventors will be described. First, an outline of an overall configuration of a sample analyzer (flow cytometer) to which the embodiment of the present disclosure is applicable will be described with reference to FIG. 1. FIG. 1 is a diagram schematically illustrating an example of an overall configuration of the sample analyzer to which the embodiment of the present disclosure is applicable.

A sample analyzer 100 illustrated in FIG. 1 includes a light irradiation unit 101 that irradiates a sample S including fine particles P flowing through a flow channel (cuvette) C with light, a detection unit 102 that detects light generated by irradiation, and an information processing unit 103 that processes information regarding the light detected by the detection unit 102. Examples of the sample analyzer 100 include an imaging cytometer in addition to the flow cytometer. Furthermore, the sample analyzer 100 may include a sorting unit 104 that sorts a specific fine particle P in the sample. An example of the sample analyzer 100 including the sorting unit 104 is a cell sorter. Hereinafter, details of the sample S that can be analyzed by the sample analyzer 100 illustrated in FIG. 1 and each component of the sample analyzer 100 will be sequentially described.

(Sample S)

The sample S may be a liquid sample containing the fine particles P. The fine particles P can be, for example, cells or acellular biological particles. The cells may be living cells, and more specific examples thereof include blood cells such as red blood cells and white blood cells, and generative cells such as sperm and fertilized eggs. In addition, the cells may be directly collected from a specimen such as whole blood, or may be cultured cells obtained after being cultured. Examples of the acellular biological particles include extracellular vesicles, and more particularly, exosomes and microvesicles. These biological particles may be labeled with one or more labeling substances (e.g., dye (fluorescent dye) and fluorochrome labeled antibody). Note that the sample analyzer 100 illustrated in FIG. 1 may be used for analysis of the fine particles P other than the biological particles. For example, beads may be analyzed for calibration.

(Flow channel C)

A flow channel C can be configured so that a flow is formed in which the sample S flows, in particular, the fine particles P contained in the sample S are arranged substantially in a line. A flow channel structure including the flow channel C may be designed so as to form a laminar flow. In particular, the flow channel structure may be designed to form a laminar flow in which a flow of the sample S (sample flow) is enclosed with a flow of the sheath fluid. The design of the flow channel structure may be appropriately selected by a person skilled in the art or a known flow channel structure may be adopted. The flow channel C may be formed inside a flow channel structure such as a microchip (chip having a flow channel on the order of micrometers) or a flow cell. A width of the flow channel C is, for example, 1 mm or less, and may be particularly between 10 $\mu$m or more and 1 mm or less. The flow channel C and the flow channel structure including the flow channel C may be formed of a material such as plastic or glass.

The sample analyzer 100 is configured such that the sample S flowing through the flow channel C, particularly the fine particle P in the sample S, is irradiated with light from the light irradiation unit 101 described later. The sample analyzer 100 may be configured such that an irradiation point (interrogation point) with respect to the sample S is located in the flow channel structure in which the flow channel C is formed, or may be configured such that the irradiation point is located outside the flow channel structure. An example of the former structure is a structure in which the light is applied to the flow channel C inside the microchip or the flow cell. In the latter structure, the light may be applied to the fine particles P after exiting the flow channel structure (in particular, a nozzle portion thereof). An example of the latter structure is a jet-in air flow cytometer.

(Light irradiation unit 101)

The light irradiation unit 101 includes a light source unit (not illustrated) that emits light and a light guide optical system (not illustrated) that guides the light to the irradiation point. The light source unit includes one or more light sources. Type of the light source is, for example, a laser light source or a light emitting diode (LED). A wavelength of the light emitted from each light source may be any wavelength of ultraviolet light, visible light, or infrared light. More specifically, the wavelength of the light emitted from each light source may be, for example, in each wavelength band including 320 nm, 355 nm, 405 nm, 488 nm, 561 nm, 637 nm, and 808 nm. The light guide optical system includes, for example, an optical component such as a beam splitter group, a mirror group, or an optical fiber. Furthermore, the light guide optical system may include a lens group for condensing light, and includes, for example, an objective lens. The irradiation point at which the sample S and the light intersect may be one or more. The light irradiation unit 101 may be configured to condense light emitted from one or more different light sources with respect to one irradiation point.

(Detection unit 102)

The detection unit 102 includes at least one light detector (not illustrated) that detects light generated by irradiating the fine particles P with light. The light to be detected is, for example, fluorescence or scattered light (e.g., any one or more of forward scattered light, backward scattered light, and side scattered light). Each light detector includes one or more light receiving elements, for example, a light receiving element array. Each light detector may include, as a light receiving element, one or more photomultiplier tubes (PMTs) and/or photodiodes such as an avalanche photo diode (APD) and a multi-pixel photon counter (MPPC). The light detector may include, for example, a PMT array including a plurality of PMTs arranged in a one-dimensional direction. Furthermore, the detection unit 102 may include an imaging element such as a charge coupled device (CCD) or a complementary metal oxide semiconductor (CMOS). The detection unit 102 can acquire an image of the fine particle P (e.g., bright-field image, a dark-field image, a fluorescence image, and the like.) by the imaging element.

The detection unit 102 includes a detection optical system (not illustrated) that causes light having a predetermined detection wavelength to reach a corresponding light detector. The detection optical system includes an objective lens (not illustrated) as described later. Furthermore, the optical detection system includes a spectral unit such as a prism and a diffraction grating, or a wavelength separation unit (not illustrated) such as a dichroic mirror and an optical filter. For example, the detection optical system is configured to spectrally separate light generated by irradiating the fine particles P with light, and separated light is detected by a plurality of light detectors more than the number of fluorescent dyes labeled with the fine particles P. A flow cytometer including the above detection optical system is called a spectral flow cytometer. Furthermore, for example, the detection optical system is configured to spectrally separate light corresponding to a fluorescence wavelength range of a specific fluorescent dye from light generated by irradiating the fine particles P with light, and cause a corresponding light detector to detect the separated light. Note that the objective lens according to the embodiment of the present disclosure described later is applicable to the detection optical system of the detection unit 102, and details thereof will be described later.

Furthermore, the detection unit 102 may include a signal processing unit (not illustrated) that converts an electric signal obtained by the light detector into a digital signal. The signal processing unit may include an analog/digital (A/D) converter as a device that performs the conversion. The digital signal obtained by the conversion by the signal processing unit may be transmitted to the information processing unit 103 described later. The digital signal is handled as detection data related to light (hereinafter also referred to as "light data") by the information processing unit 103. The light data may be, for example, light data including fluorescence data. More specifically, the light data may be light intensity data, and the light intensity may be light intensity data of light including fluorescence (feature quantities such as area, height, and width may be included).

(Information processing unit 103)

The information processing unit 103 includes, for example, a processing unit (not illustrated) that executes processing of various types of data (e.g., light data) and a storage unit (not illustrated) that stores various types of data. When acquiring the light data corresponding to the fluorescent dye from the detection unit 102, the processing unit can perform fluorescence leakage correction (compensation process) on the light intensity data. In addition, in the case of the spectral flow cytometer, the processing unit performs a fluorescence separation process on the light data and acquires light intensity data corresponding to the fluorescent dye.

The above fluorescence separation process may be performed, for example, according to an unmixing method disclosed in JP 2011 -232259 A. When the detection unit 102 includes an imaging element, the processing unit may acquire form information of the fine particle P based on an image acquired by the imaging element. In addition, the storage unit may be configured to be able to store the light data acquired. The storage unit may be further configured to be able to store spectral reference data used in the unmixing process.

When the sample analyzer 100 includes the sorting unit 104 to be described later, the information processing unit 103 may determine whether to sort the fine particles P based on a detection result including the light data and/or the form information. Then, the information processing unit 103 controls the sorting unit 104 based on the determination result, and the sorting unit 104 may sort the fine particles P.

The information processing unit 103 may be configured to be able to output various types of data (e.g., light data and images). For example, the information processing unit 103 may output various types of data (e.g., two-dimensional plots and spectral plots) generated based on the light data. Furthermore, the information processing unit 103 may be configured to be able to receive inputs of various types of data, and may receive, for example, a gating process on a plot by the user. The information processing unit 103 may include an output unit (e.g., display) (not illustrated) and an input unit (e.g., keyboard) (not illustrated) for executing the output and the input.

The information processing unit 103 may be configured as a general-purpose computer, and may be configured as an information processing apparatus including, for example, a central processing unit (CPU), a random access memory (RAM), and a read only memory (ROM). The information processing unit 103 may be included in a housing in which the light irradiation unit 101 and the detection unit 102 are provided, or may be outside the housing. Furthermore, various processes or functions by the information processing unit 103 may be realized by a server computer or a cloud connected via a network.

(Sorting unit 104)

For example, the sorting unit (cell sorter) 104 may execute sorting of the fine particles P according to the determination result by the information processing unit 103. A sorting method may be, for example, a method in which a droplet containing the fine particles P is generated by vibration, a charge is applied to the droplet to be sorted, and a traveling direction of the droplet is controlled by an electrode. Furthermore, the sorting method may be a method of controlling a traveling direction of the fine particles P in the flow channel structure so as to perform sorting. The flow channel structure is provided with, for example, a control mechanism using pressure (injection or suction) or charge. An example of the flow channel structure is a chip (e.g., chip disclosed in JP 2020-76736 A) in which the flow channel C has a flow channel structure branching into a collection flow channel and a waste liquid flow channel in a downstream thereof, and the specific fine particle P is collected into the collection flow channel. It is common to replace a droplet ejection part (nozzle) according to the size of the fine particle P.

Note that the configuration of the sample analyzer 100 illustrated in FIG. 1 is an example of the configuration of the sample analyzer 100 to which the embodiment of the present disclosure is applicable. However, the sample analyzer 100 to which the embodiment of the present disclosure is applicable is not limited to the configuration in FIG. 1.

<1.2 Detection unit according to comparative example>

Next, an outline of a detection unit 102a of the sample analyzer 100 according to a comparative example will be described with reference to FIG. 2. FIG. 2 is a diagram illustrating an example of a configuration of the detection unit 102a according to the comparative example. Note that, here, the comparative example means the detection unit 102a that has been repeatedly studied by the inventors before reaching the embodiment of the present disclosure.

The detection unit 102a illustrated in FIG. 2 includes at least one light detector 500 that detects light generated by irradiating the fine particles P with light and a detection optical system 200a that causes light having a predetermined detection wavelength to reach corresponding light detector 500. Further, the detection optical system 200a includes an objective lens 300a to which light generated by irradiation enters. Hereinafter, each component included in the detection unit 102a according to the comparative example will be sequentially described. Note that, although not illustrated in FIG. 2, the sample analyzer 100 may include a light detector such as a forward scatter (FSC) detector that detects forward scattered light generated by irradiating the fine particles P with light, and a detection optical system that guides light to the light detector.

(Objective lens 300a)

The objective lens 300a is provided close to the flow channel C at a predetermined interval, and can guide light generated by irradiating the fine particles P with light to the light detector 500 described later. For example, in the comparative example, a finite conjugate lens is used as the objective lens 300a. Note that the objective lens 300a is preferably disposed close to the flow channel C in order to guide the light from the fine particles P flowing through the flow channel C to the light detector 500. In consideration of external vibration and an external load, it is preferable, for example, to set a distance between the flow channel C and the objective lens 300a to 1 mm or more.

(Light detector 500)

The light detector 500 may be, for example, an ultraviolet (UV) detector that detects ultraviolet fluorescence generated by irradiating the fine particles P with light, a side scatter (SSC) detector and a fluorescence detector that detect side scattered light and fluorescence generated by irradiating the fine particles P with light.

<1.3 Background>

Next, a background leading to the embodiment of the present disclosure created by the inventors will be described.

As described above, in recent years, an analyzer capable of performing multicolor analysis that detects light of a plurality of different wavelengths and performs analysis has been strongly demanded in basic medicine and clinical fields as an analyzer used for flow cytometry or the like. As a device capable of the multicolor analysis, a spectral sample analyzer (flow cytometer) has attracted attention. The spectral sample analyzer is equipped with the light detector 500 that detects light in a plurality of different wavelength ranges, and can detect, for example, fluorescence in a wide wavelength range (e.g., light having a wavelength of 300 nm to 900 nm).

Specifically, the sample analyzer 100 is required to cope with, for example, fluorescence in an ultraviolet region (specifically, excitation at a wavelength of 300 nm to 400 nm) and fluorescence in an infrared region (specifically, excitation at a wavelength of 700 nm to 800 nm) in addition to fluorescence at a wavelength of 400 nm to 700 nm. In other words, the detection wavelength range of the sample analyzer 100 is widened, but in the comparative example, there is a limit to improvement of aberration of the objective lens 300a. Therefore, it cannot be said that light in a wide wavelength range can be suitably detected.

Furthermore, the objective lens 300a is required to guide light emitted from the fine particles P flowing through the flow channel C to the light detector 500 and to secure rigidity in consideration of external vibration and an external load of the flow channel C. Therefore, it is required to suitably set a distance between the objective lens 300a and the flow channel C (details of the distance will be described later). In addition, it is required to reduce the size of the objective lens 300a in order to avoid an increase in the size of the sample analyzer 100. Furthermore, in order to suppress an increase in manufacturing cost of the sample analyzer 100, it is preferable that the number of components (lenses) configuring the objective lens 300a is small.

In addition, in a case of detecting light in a wide wavelength range, it is required to arrange various optical components such as a notch filter and a dichroic mirror for preventing transmission of excitation light in the detection optical system 200a that guides light from the objective lens 300a to the plurality of light detectors 500.

In the comparative example, since the finite conjugate lens is adopted as the objective lens 300a, a back focal length after transmission through the objective lens 300a is determined according to a magnification of the objective lens 300a. Therefore, in the comparative example, since the focal length is determined first, it is difficult to secure a space for arranging various optical components in an optical path from the objective lens 300a to the light detector 500, and an arrangement of various optical components is restricted. Therefore, in the comparative example, for example, it is inevitable that a necessary optical component cannot be arranged because there is no space, and even when the necessary optical component can be arranged, each optical component cannot be freely arranged, and thus the sample analyzer 100 (specifically, the detection optical system 200a) becomes large. Note that "back" used in the present specification indicates front and back when viewed from light generated by irradiating the fine particles P with light, and a position where the light from the fine particles P reaches first is front, and a position where the light from the fine particles P reaches later is back. Therefore, for example, "back of the objective lens 300a" means a position where the light from the fine particles P reaches after reaching the objective lens 300a.

In the comparative example, the objective lens 300a having a long focal length is used. Since an entrance pupil diameter of the objective lens 300a is determined in proportion to a numerical aperture and the focal length, it is difficult to reduce the entrance pupil diameter of the objective lens 300a in the comparative example. Therefore, in the comparative example, it is difficult to reduce the size in a lens radial direction of the detection optical system 200a located behind the objective lens 300a. In other words, in the comparative example, it becomes difficult to reduce the sizes of various optical components arranged behind the objective lens 300a, and it is inevitable that the sample analyzer 100 (specifically, the detection optical system 200a) becomes large.

Therefore, in view of the above situation, the inventors have created the embodiment of the present disclosure regarding the objective lens 300. According to the embodiment of the present disclosure, since a distance between the objective lens 300 and the flow channel C is appropriately set, it is possible to guide light emitted from the fine particles P flowing through the flow channel C to the light detector 500 and secure rigidity in consideration of external vibration and an external load of the flow channel C. Further, according to the embodiment of the present disclosure, even when the detection wavelength range of the sample analyzer 100 is widened, the aberration of the objective lens 300 can be improved. In addition, according to the embodiment of the present disclosure, it is possible to suppress an increase in the number of components and an increase in size of the objective lens 300.

Furthermore, in the embodiment of the present disclosure, since the objective lens 300 can be an infinite conjugate lens, a light beam emitted from the objective lens 300 is a parallel light beam, and a long back focus can be secured. Therefore, according to the embodiment of the present disclosure, it is possible to freely arrange various optical components in an optical path from the objective lens 300 to the light detector 500 within a range in which the aperture of an imaging lens 400 can be manufactured. As a result, according to the present embodiment, it is possible to avoid the sample analyzer 100 from becoming large.

Furthermore, in the embodiment of the present disclosure, since the focal length of the objective lens 300 can be shortened, the entrance pupil diameter of the objective lens 300 can be reduced. Therefore, according to the present embodiment, the size in the lens radial direction of the detection optical system 200a behind the objective lens 300a can be reduced, and the sizes of various optical components arranged in the detection optical system 200a behind the objective lens 300a can be reduced. Hereinafter, details of the embodiment of the present disclosure created by the inventors will be described.

<<2. Embodiment of the present disclosure>>

<2.1 Detection unit>

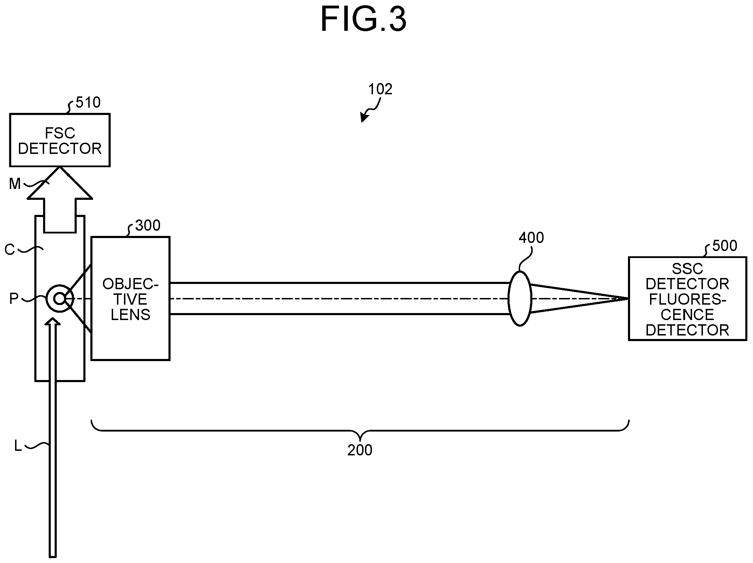

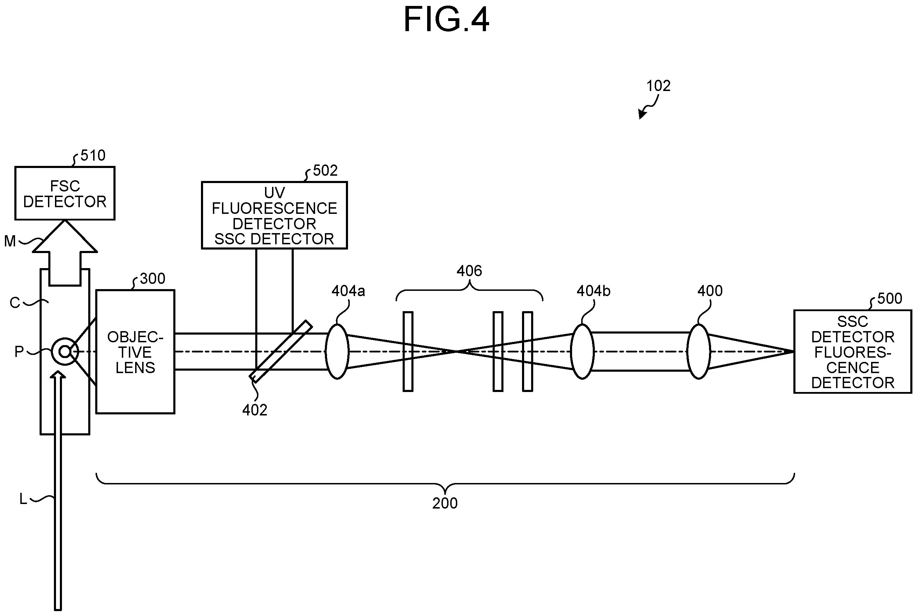

First, a configuration of the detection unit 102 of the sample analyzer 100 according to an embodiment of the present disclosure will be described with reference to FIGS. 3 and 4. FIGS. 3 and 4 are diagrams illustrating an example of the configuration of the detection unit 102 according to the embodiment of the present disclosure.

As illustrated in FIG. 3, the detection unit 102 according to the embodiment of the present disclosure includes the light detector 500 and an FSC detector 510 that detect light generated by irradiating fine particles P with light, and a detection optical system 200 that causes light of a predetermined detection wavelength to reach corresponding light detector 500. Furthermore, the detection optical system 200 includes an objective lens 300 to which light generated by irradiation enters, and an imaging lens 400 that forms an image of light emitted from the objective lens 300 on the light detector 500. Hereinafter, each component included in the detection unit 102 according to the present embodiment will be sequentially described.

(Objective lens 300)

The objective lens 300 is provided close to the flow channel C at a predetermined interval, and can guide light generated by irradiating the fine particles P with light to the light detector 500 described later. In the present embodiment, since the objective lens 300 is an infinite conjugate lens, a light beam emitted from the objective lens 300 is a parallel light beam, and a long back focus can be secured. Therefore, according to the embodiment of the present disclosure, it is possible to secure a space for arrangement of various optical components in an optical path from the objective lens 300 to the light detector 500. Note that details of the objective lens 300 according to the present embodiment will be described later.

(Imaging lens 400)

The imaging lens 400 is provided between the objective lens 300 and the light detector 500, and can focus the parallel light beam emitted from the objective lens 300 onto the light detector 500. Specifically, the imaging lens 400 can form an image on an optical fiber (not illustrated) that guides light to the light detector 500.

(Light detector 500)

The light detector 500 is an SSC detector, a fluorescence detector, or the like that detects side scattered light and fluorescence generated by irradiating the fine particles P with irradiation light L. In the present embodiment, the SSC detector can detect light having a wavelength of, for example, about 488 nm, and the fluorescence detector can detect fluorescence having a wavelength of about 400 nm to 920 nm.

(FSC detector 510)

The FSC detector 510 is a detector that detects forward scattered light M generated by irradiating the fine particles P with the irradiation light L.

Furthermore, in the present embodiment, the configuration of the detection unit 102 is not limited to the configuration illustrated in FIG. 3, and may be, for example, a configuration illustrated in FIG. 4.

The detection unit 102 according to the present embodiment illustrated in FIG. 4 includes the light detector 500 and the FSC detector 510 that detect light generated by irradiating the fine particles P with light, and further includes an ultraviolet (UV) detector 502. Furthermore, the detection optical system 200 illustrated in FIG. 4 includes the objective lens 300 and the imaging lens 400, and further includes a dichroic mirror 402, relay lenses 404a and 404b, and a notch filter 406. According to the present embodiment, since a space for arrangement of various optical components can be secured in the optical path from the objective lens 300 to the light detector 500, the optical components can be freely arranged by combining a relay lens 404 and the like described later. Hereinafter, each component included in the detection unit 102 illustrated in FIG. 4 will be sequentially described. Note that, here, description of components common to the detection unit 102 illustrated in FIG. 3 will be omitted.

(UV detector 502)

The UV detector 502 detects UV fluorescence generated by irradiating the fine particles P with the irradiation light L. In the present embodiment, the UV detector 502 can detect ultraviolet fluorescence having a wavelength of about 360 nm to 400 nm. The UV detector 502 can also detect side scattered light in a UV wavelength range.

(Dichroic mirror 402)

The dichroic mirror 402 can separate the UV fluorescence generated by irradiating the fine particles P with the irradiation light L from the side scattered light and other fluorescence, and guide the separated light to the UV detector 502. Note that the present embodiment is not limited to the dichroic mirror 402, and may be, for example, a spectral component such as a prism or a diffraction grating. In the present embodiment, since it is difficult to correct the aberration with respect to ultraviolet rays, it is preferable to provide the dichroic mirror 402 at a position behind the objective lens 300 and before the relay lens 404a to separate the ultraviolet fluorescence first.

(Relay lenses 404a and 404b)

The relay lenses 404a and 404b are lenses for guiding light from the optical component disposed ahead on the optical path to the optical component disposed next. By using these relay lenses 404a and 404b, a degree of freedom of the layout of each optical component in the detection optical system 200 can be further improved. Note that, in the present embodiment, the number of the relay lenses 404 is not limited to two as illustrated in FIG. 4, and may be one or more. Furthermore, in the present embodiment, the position of the relay lens 404 is not limited to the position illustrated in FIG. 4.

(Notch filter 406)

For example, one or more notch filters 406 are provided between the dichroic mirror 402 and the imaging lens 400, and have a wavelength separation function of transmitting light having a wavelength in a desired band among side scattered light and fluorescence generated by irradiating the fine particles P with the irradiation light L and guiding the light to the light detector 500. In the embodiment, the number of notch filters 406 is not limited to three as illustrated in FIG. 4, and one or more notch filters may be provided. In the sample analyzer 100 capable of detecting a plurality of wavelength bands, the notch filter 406 is preferably disposed at a position illustrated in FIG. 4. However, in the present embodiment, the notch filter 406 is not limited to be disposed at the position illustrated in FIG. 4.

As described above, in the detection unit 102 according to the present embodiment illustrated in FIG. 4, light from the fine particles P is spectrally separated or wavelength is separated by various optical components included in the detection optical system 200, and light in different wavelength ranges can be detected by the plurality of detectors 500 and 502, included in the sample analyzer 100, having a larger number than the number of fluorescent dyes of the fine particles.

In the example illustrated in FIG. 4, the detection unit 102 applied to the sample analyzer (flow cytometer) 100 that detects fluorescence, UV light, and scattered light has been described. However, the detection unit 102 according to the present embodiment is not limited to being applied to these devices. The detection unit 102 according to the present embodiment may also be applied to the sample analyzer 100 that detects at least one of fluorescence, UV light, and scattered light. For example, the detection unit 102 according to the present embodiment can also be applied to the detection unit 102 of the sample analyzer 100 for detecting unstained fine particles P that are not fluorescently labeled only with scattered light.

<2.2 Objective lens>

Next, details of the objective lens 300 according to the embodiment of the present disclosure will be described. The objective lens 300 according to the present embodiment includes a plurality of lenses. In addition, as described above, in the present embodiment, since the objective lens 300 can be the infinite conjugate lens, the light beam emitted from the objective lens 300 becomes the parallel light beam, and the long back focus can be secured. Therefore, according to the present embodiment, it is possible to secure a space for arranging various optical components in the optical path from the objective lens 300 to the light detector 500.

In the present embodiment, the objective lens 300 having a short focal length can be used. As described above, since the entrance pupil diameter of the objective lens 300 is determined in proportion to the numerical aperture and the focal length, the entrance pupil diameter of the objective lens 300 can be reduced in the present embodiment. Therefore, in the present embodiment, the size in the lens radial direction of the detection optical system 200 located behind the objective lens 300 can be reduced. In other words, the size of various optical components arranged behind the objective lens 300 can be reduced.

The objective lens 300 is preferably arranged close to the flow channel C in order to guide light from the fine particles P flowing through the flow channel C to the light detector 500. However, in consideration of external vibration and an external load, a distance (working distance (WD)) between the flow channel C and the objective lens 300 is preferably 1 mm or more. Therefore, in the present embodiment, WD of 1 mm or more is secured between the flow channel C and the objective lens 300.

Specifically, in the objective lens 300 according to the present embodiment, a ratio of a converted optical path length L to a focal length f of the objective lens 300 satisfies Mathematical Expression (1) below, where the converted optical path length L denotes a distance from the lens surface of the objective lens 300 closest to the flow channel C to a center of the flow channel C converted into a distance in dry air (dry system).

$$0.15 \leq L/f \leq 0.45 \qquad\qquad \cdots (1)$$

Specifically, when L/f falls below the lower limit of Mathematical Expression (1), the converted optical path length L becomes too small, and it becomes difficult to secure rigidity of the objective lens 300 in consideration of external vibration of the flow channel C (cuvette) and an external load. Furthermore, when L/f falls below the lower limit of Mathematical Expression (1), the focal length f becomes too large, leading to an increase in size and manufacturing cost of various optical components.

On the other hand, when L/f exceeds the upper limit of Mathematical Expression (1), the converted optical path length L becomes too large or the focal length f becomes too small. It becomes difficult to correct the aberration of the objective lens 300. As a result, L/f exceeding the upper limit of Mathematical Expression (1) causes an increase in manufacturing cost due to an increase in the number of lenses configuring the objective lens 300, and an increase in the total length and the diameter of the objective lens 300.

Therefore, in the present embodiment, it is preferable that the objective lens 300 satisfies the above Mathematical Expression (1) in order to ensure the rigidity of the flow channel C and the aberration correction of the objective lens 300, enable downsizing of various optical components, and suppress an increase in manufacturing cost. With this configuration according to the present embodiment, it is possible to correct the aberration of the objective lens 300, and it is possible to reduce a risk such as unstable droplets due to external vibration and breakage of the flow channel C due to an external load while reducing the size of the detection optical system 200.

Furthermore, the distance from the lens surface of the objective lens 300 closest to the flow channel C to the center of the flow channel C is set as the converted optical path length L converted to a distance in the dry system, and the distance is defined so as to satisfy the relationship in Mathematical Expression (1), whereby the degree of freedom can be given to the configuration around the objective lens 300 and the flow channel C. Specifically, for example, in the present embodiment, under the condition that the converted optical path length L is kept constant, the degree of freedom can be given to a width of the flow channel C, a thickness and material of the flow channel (cuvette), and a thickness and material of immersion gel. Furthermore, in the present embodiment, various configurations of the objective lens 300 may be used under the condition that the converted optical path length L is kept constant.

Furthermore, in order to analyze the fine particles P labeled with more labeling substances (dyes (fluorescent dyes)), the sample analyzer 100 needs to have a plurality of excitation light sources (e.g., laser light sources). In recent years, the number of fluorescence (number of colors) is increasing day by day, and for example, in the flow cytometer, it is required to cope with fluorescence in an ultraviolet region (specifically, excitation at a wavelength of 300 nm to 400 nm) and fluorescence in an infrared region (specifically, excitation at a wavelength of 700 nm to 800 nm) in addition to conventionally-used fluorescence having a wavelength of 400 nm to 700 nm. Accordingly, since the detection wavelength range is also widened, it is very difficult to improve the aberration of the objective lens 300.

Therefore, in the present embodiment, the objective lens 300 is set to correspond from ultraviolet to infrared (specifically, wavelength of 360 nm to 920 nm). Specifically, in the present embodiment, a refractive index $n_d$ and an Abbe number $v_d$ of a positive lens of the objective lens 300 located closest to the flow channel C satisfy the following Mathematical Expressions (2) and (3), whereby transmittance in a wide band can be secured. Here, the positive lens refers to a convex lens whose center is thicker than the periphery.

$$1.67 < n_d < 1.81 \qquad \cdots (2)$$

$$38 < v_d \qquad \cdots (3)$$

In Mathematical Expression (2), $n_d$ denotes a refractive index at d-line, and in Mathematical Expression (3), $v_d$ denotes the Abbe number at d-line. The Abbe number is an amount related to light dispersion of a transparent substance, such as optical glass, and is a reciprocal of dispersibility. A larger Abbe number results in a smaller change in the refractive index by wavelength. The d line is a strong double line observed in an emission spectrum of sodium atoms, and has wavelengths of 589.592424 nm and 588.995024 nm.

In the present embodiment, since the refractive index $n_d$ and the Abbe number $v_d$ of the positive lens of the objective lens 300 located closest to the flow channel C satisfy Mathematical Expressions (2) and (3), the transmittance in the ultraviolet region is secured, and chromatic aberration can be corrected in a wide band. Specifically, for example, when the refractive index $n_d$ of the positive lens of the objective lens 300 located closest to the flow channel C falls below the lower limit of Mathematical Expression (2), a curvature of the positive lens increases, which deteriorates performance of the positive lens and also makes it difficult to manufacture the positive lens. On the other hand, when the refractive index $n_d$ of the positive lens of the objective lens 300 located closest to the flow channel C exceeds the upper limit of Mathematical Expression (2), a glass transmittance for ultraviolet rays will be reduced. In addition, when the Abbe number $v_d$ of the positive lens of the objective lens 300 located closest to the flow channel C falls below the lower limit of Mathematical Expression (3), the glass transmittance for ultraviolet rays will be reduced. Therefore, in the present embodiment, when the refractive index $n_d$ and the Abbe number $v_d$ of the positive lens located closest to the flow channel C of the objective lens 300 satisfy Mathematical Expressions (2) and (3), the transmittance in the ultraviolet region is secured, and the chromatic aberration can be corrected in a wide band.

Furthermore, in the present embodiment, the refractive index $n_d$, the Abbe number $v_d$, and the partial dispersion ratio $P_gF$ of three or more positive lenses among the positive lenses included in the objective lens 300 satisfy the following Mathematical Expressions (4), (5), and (6), thereby making it possible to ensure the transmittance in the ultraviolet region and to correct the chromatic aberration in a wide band.

$$n_d < 1.52 \qquad \cdots (4)$$

$$79 < v_d \qquad \cdots (5)$$

$$P_gF < 0.54 \qquad \cdots (6)$$

In Mathematical Expression (4), $n_d$ denotes the refractive index at the d-line, and in Mathematical Expression (5), $v_d$ denotes the Abbe number at the d-line. Further, $P_gF$ denotes a partial dispersion ratio between g-line and F-line. The g-line is an emission spectrum of mercury and has a wavelength of 435.834 nm, and the F-line is an emission spectrum of hydrogen and has a wavelength of 486.834 nm.

In the present embodiment, the refractive index $n_d$, the Abbe number $v_d$, and the partial dispersion ratio $P_gF$ of three or more positive lenses among the positive lenses included in the objective lens 300 satisfy Mathematical Expressions (4), (5), and (6), so that the transmittance in the ultraviolet region is secured, and the chromatic aberration can be corrected in a wide band. Specifically, when the refractive index $n_d$ of three or more positive lenses included in the objective lens 300 exceeds the upper limit of the above Mathematical Expression (4), the glass transmittance for the ultraviolet rays will be reduced. In addition, when the Abbe number $v_d$ of three or more positive lenses included in the objective lens 300 falls below the lower limit of the above Mathematical Expression (5), the chromatic aberration will be deteriorated. Furthermore, when the partial dispersion ratio $P_gF$ of three or more positive lenses included in the objective lens 300 exceeds the upper limit of the above Mathematical Expression (6), the chromatic aberration for ultraviolet rays will be deteriorated. Therefore, in the present embodiment, the refractive index $n_d$, the Abbe number $v_d$,

and the partial dispersion ratio $P_gF$ of three or more positive lenses among the positive lenses included in the objective lens 300 satisfy Mathematical Expressions (4), (5), and (6), thereby making it possible to ensure the transmittance in the ultraviolet region and to correct the chromatic aberration in a wide band.

Furthermore, in the present embodiment, the refractive index $n_d$ and the Abbe number $v_d$ of three or more negative lenses among the negative lenses included in the objective lens 300 satisfy Mathematical Expressions (7) and (8) below, so that the transmittance in the ultraviolet region is secured, and the chromatic aberration can be corrected in a wide band. Here, the negative lens denotes a concave lens whose center is thinner than the periphery.

$$n_d < 1.78 \qquad\qquad \cdots (7)$$

$$29 < v_d \qquad\qquad \cdots (8)$$

In the same manner as described above, $n_d$ in Mathematical Expression (7) is the refractive index at the d-line, and $v_d$ in Mathematical Expression (8) is the Abbe number at the d-line.

In the present embodiment, the refractive index $n_d$ and the Abbe number $v_d$ of three or more negative lenses among the negative lenses included in the objective lens 300 satisfy Mathematical Expressions (7) and (8), so that the transmittance in the ultraviolet region is secured, and the chromatic aberration can be corrected in a wide band. Specifically, when the refractive index $n_d$ of three or more negative lenses included in the objective lens 300 exceeds the upper limit of the above Mathematical Expression (7), the glass transmittance for ultraviolet rays will be reduced. In addition, when the Abbe number $v_d$ of three or more negative lenses included in the objective lens 300 falls below the lower limit of the above Mathematical Expression (8), the glass transmittance for ultraviolet rays will be reduced. Therefore, in the present embodiment, when the refractive indexes $n_d$ and the Abbe numbers $v_d$ of three or more negative lenses among the negative lenses included in the objective lens 300 satisfy Mathematical Expressions (7) and (8), the transmittance in the ultraviolet region is secured, and the chromatic aberration can be corrected in a wide band.

Furthermore, in the present embodiment, the objective lens 300 is preferably a lens having a wide objective field of view, thereby making it possible to irradiate the fine particles P with light from a plurality of excitation light sources having optical axes different from each other. Specifically, in the present embodiment, for example, an objective lens of $\Phi 660 \, \mu m$ is adopted. This increases flexibility in forming excitation spots with different axes, and the number of analyzable spots can be increased.

According to the objective lens 300 of the embodiment of the present disclosure, it is possible to secure the function of the objective lens and the rigidity of the flow channel while supporting the detection of light in a wide wavelength range, and to downsize the sample analyzer 100 and various optical components configuring the sample analyzer. Specifically, the objective lens 300 according to the embodiment of the present disclosure can obtain the following effects.

First, in the present embodiment, since the objective lens 300 is the infinite conjugate lens, the light beam emitted from the objective lens 300 becomes the parallel light beam, and the long back focus can be secured. Therefore, according to the present embodiment, it is possible to secure a space for arranging various optical components in the optical path from the objective lens 300 to the light detector 500. According to the present embodiment, for example, by arranging the relay lens 404 and the like in the detection optical system 200, it is possible to secure a space at an arbitrary position and further install various optical components, so that a layout flexibility of the detection optical system 200 is increased. In the spectral flow cytometer, the notch filter 406 or the like may be inserted to prevent transmission of the excitation light, and it is easy to secure a space for the notch filter 406. Furthermore, the dichroic mirror 402 and the like may be inserted to detect light in the ultraviolet region, and it is easy to secure a space for the dichroic mirror 402.

On the other hand, in the comparative example described above, since the finite conjugate lens is used as the objective lens 300a, the focal length is determined according to the magnification of the objective lens 300a, and emission light becomes convergent light. Therefore, the arrangement of various optical components on the optical path behind the objective lens 300a is restricted.

Furthermore, according to the present embodiment, the focal length of the objective lens 300 can be shortened. In the comparative example, for example, the objective lens 300a having a high numerical aperture (1 or more) and a long WD (1 mm or more) has the focal length of 10 mm or more (e.g., 14.3 mm). However, according to the present embodiment, the focal length of the objective lens 300 can be shortened to about 4.1 mm. In addition, according to the present embodiment, the entrance pupil diameter of the objective lens 300 can be reduced. Therefore, according to the present embodiment, since the entrance pupil diameter of the objective lens 300 can be reduced, the size in the radial direction of the optical components disposed behind the objective lens 300, i.e., the size of the optical components installed in the detection optical system 200, can be reduced.

Furthermore, according to the present embodiment, the objective field of view of the objective lens 300 can be widened. In the comparative example, for example, the objective lens 300a having a high numerical aperture (1 or more) and a long WD (1 mm or more) has the objective field of view of about $\Phi$ 400 $\mu$m. However, according to the present embodiment, the objective field of view can be widened to about $\Phi$ 600 $\mu$m. Therefore, according to the present embodiment, it is possible to irradiate the fine particles P with light from the plurality of excitation light sources having optical axes different from each other. This increases flexibility in forming excitation spots with different axes, and the number of analyzable spots can be increased.

Furthermore, according to the present embodiment, the wavelength range that can be supported by the objective lens 300 can be widened. In the comparative example, the wavelength range that can be supported by the objective lens 300a having a high numerical aperture (1 or more) and a long WD (1 mm or more) is from 400 nm to 700 nm. However, according to the present embodiment, for example, 360 nm to 920 nm (ultraviolet to infrared) can be supported.

<<3. Examples>>

The embodiment of the present disclosure has been described above. Next, examples of the present embodiment will be described more specifically with reference to specific examples. Note that the following examples are examples of the embodiment of the present disclosure, and the embodiment of the present disclosure is not limited to the following examples.

In Examples 1 and 2 described below, the flow channel C is 0.1 mm on one side (width: 0.2 mm), the channel thickness is 1.95 mm, and the immersion gel thickness is 0.15 mm. Then, the converted optical path length becomes L = 1.514984 mm. Under the condition that the converted optical path length L is constant, it is also possible to set the flow channel C to 0.1 mm on one side (width: 0.2 mm), the flow channel thickness to 2 mm, and the immersion gel thickness to 0.10 mm.

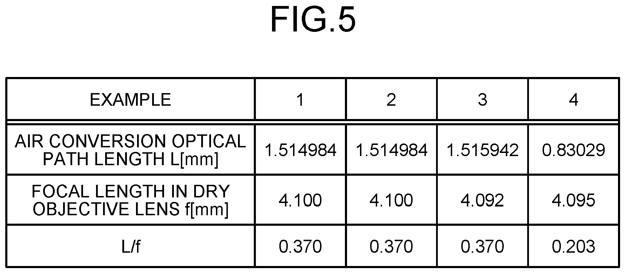

FIG. 5 illustrates L/f that is the ratio of the converted optical path length L to the focal length f of the objective lens 300 in Examples 1 to 4. FIG. 5 is data summarizing L/f values in Examples 1 to 4.

As described above, in the objective lens 300 according to the present embodiment, L/f is the ratio of the converted optical path length L to the focal length f of the objective lens 300, where the converted optical path length L denotes the distance from the lens surface of the objective lens 300 closest to the flow channel C to the center of the flow channel C converted into the distance in the dry system.

It is apparent from FIG. 5 that L/f satisfies Expression (1) in all of Examples 1 to 4 described above. In addition, the objective lens 300 of each example described below satisfies the above Mathematical Expressions (2) to (8).

Note that, in lens data of each example, s denotes a surface number of the objective lens 300, R denotes a curvature radius (mm) of a lens surface of each lens configuring the objective lens 300, and D denotes a wall thickness or a surface interval (mm) of each lens. In addition, $\infty$ in the lens data indicates infinity. For example, a surface interval $d_0$ indicates a distance from a surface indicated by a surface number s0 to a surface indicated by a surface number s1. Further, $n_d$ denotes the refractive index of each lens with respect to the d-line, and $v_d$ denotes the Abbe number of each lens with respect to the d-line.

Further, in the lens data illustrated in each example, the surface indicated by the surface number s0 indicates the center of the flow channel C. The surface indicated by the surface number s1 is an inner wall of the flow channel C. A surface indicated by a surface number s2 is an outer wall of the flow channel C, and is a surface to which the immersion gel is applied. A surface indicated by a surface number s3 is the lens surface of the objective lens 300 closest to the flow channel C.

<3.1 Example 1>

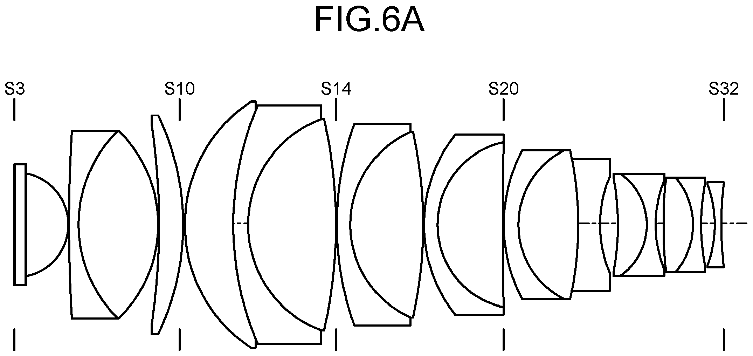

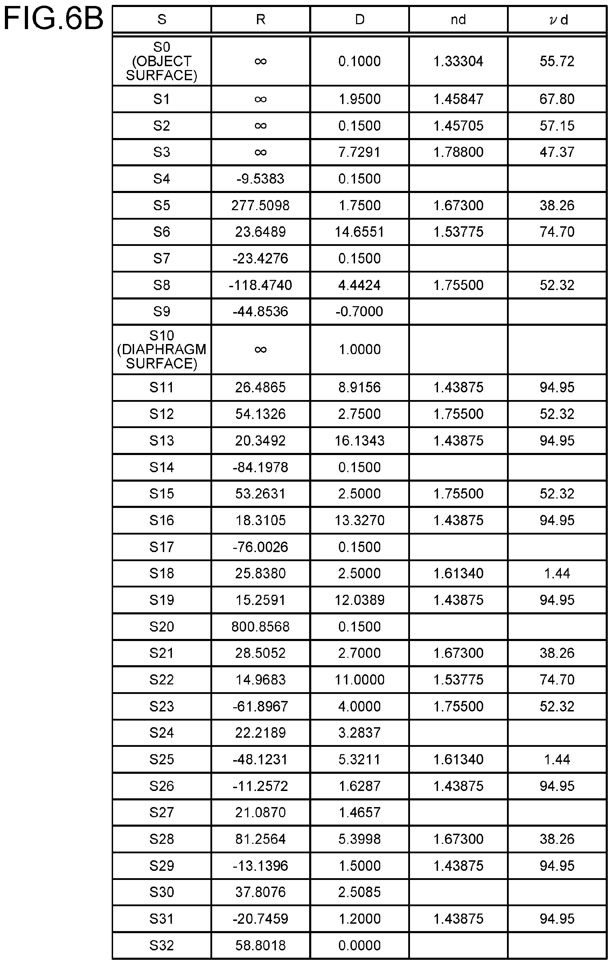

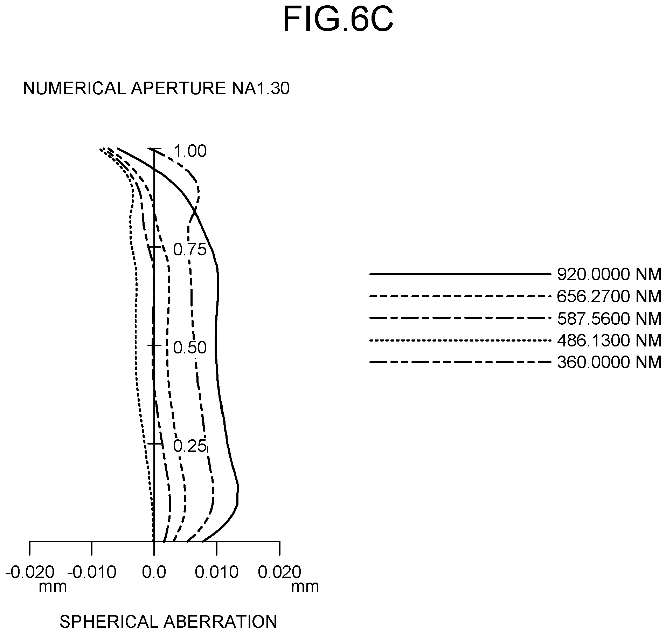

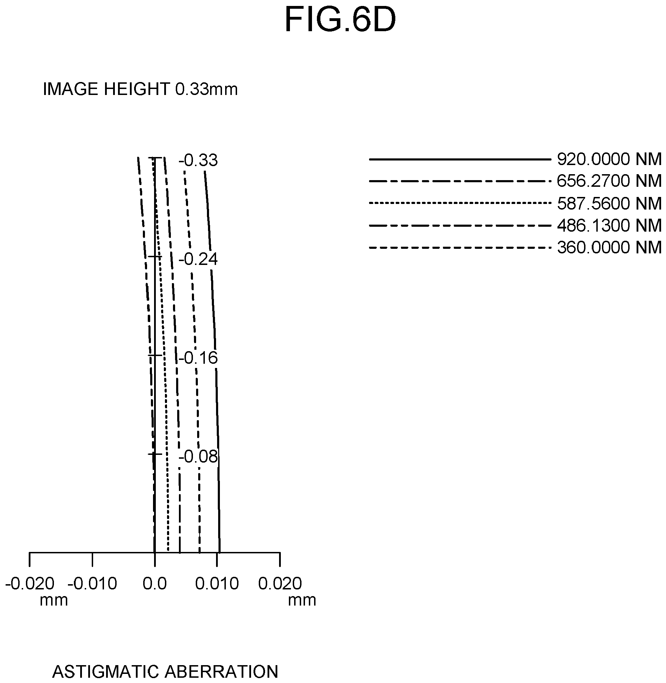

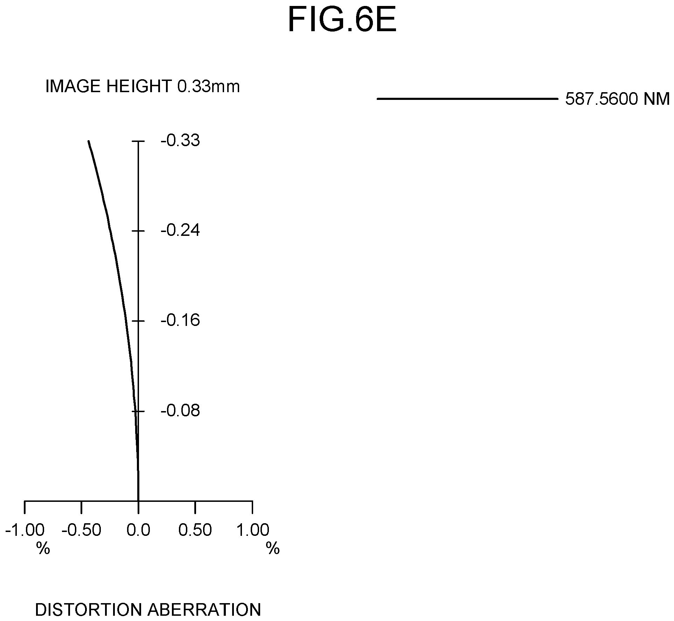

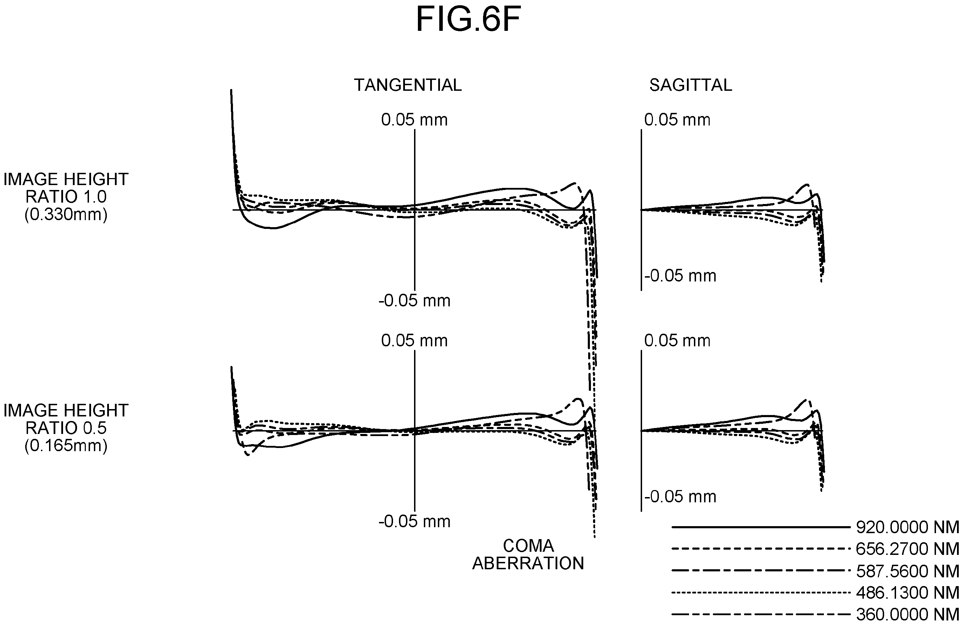

First, Example 1 will be described with reference to FIGS. 6A to 6F. FIG. 6A is a cross-sectional view of the objective lens 300 in Example 1, and FIG. 6B is lens data of the objective lens 300 in Example 1. FIGS. 6C to 6E are aberration diagrams of the objective lens 300 in Example 1, and are longitudinal aberration diagrams on the object surface when reverse ray tracing that traces an infinite beam entering from an image side toward an object side is performed. Specifically, FIG. 6C is spherical aberration, FIG. 6D is astigmatic aberration, and FIG. 6E is distortion aberration. Further, FIG. 6F is an aberration diagram of the objective lens 300 of Example 1, and is a lateral aberration diagram on the object surface when reverse ray tracing that traces the infinite beam entering from the image side toward the object side is performed.

In Example 1, the lens data illustrated in FIG. 6B was applied to the objective lens 300 having the configuration illustrated in FIG. 6A, and optical simulation was performed. In the lens data in FIG. 6B, a surface indicated by a surface number s32 corresponds to the lens surface closest to the image side. Then, results of aberrations illustrated in FIGS. 6C to 6F were obtained.

As illustrated in FIGS. 6C to 6F, optical simulation was performed with light having wavelengths of 360.0000 nm, 404.4661 nm, 435.8300 nm, 486.1300 nm, 546.0700 nm, 587.5600 nm, 656.2700 nm, and 920.0000 nm. As illustrated in FIGS. 6C to 6F, it was found that, in the objective lens 300 according to Example 1, variation in the focal point (aberration) was suppressed in a wide wavelength range. In other words, the chromatic aberration has been improved. In FIGS. 6C, 6D, and 6F, only a part of the results obtained by optical simulation is illustrated for easy understanding.

<3.2 Example 2>

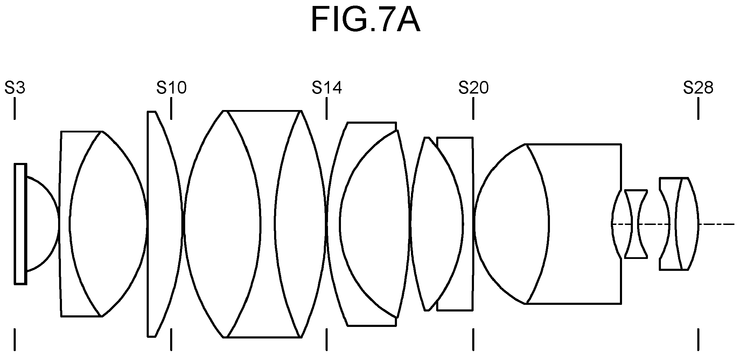

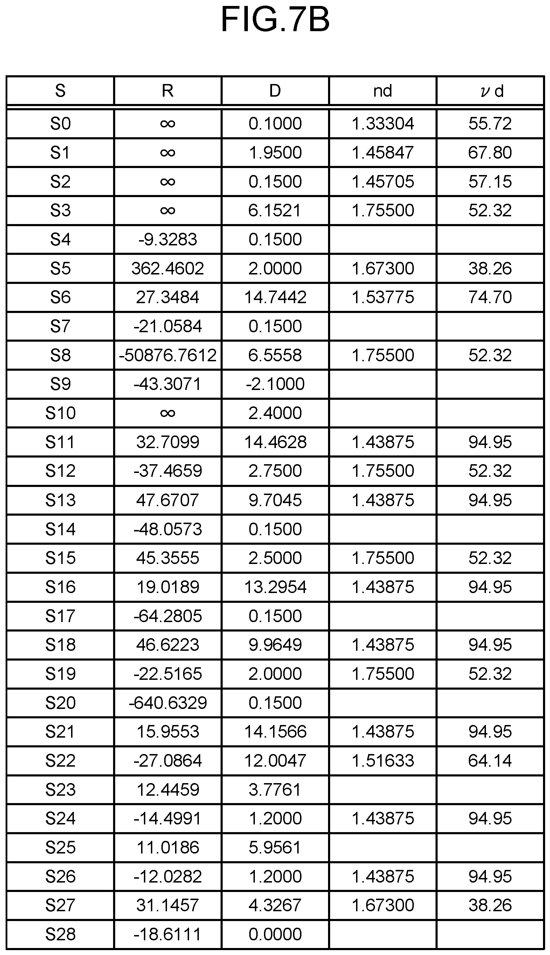

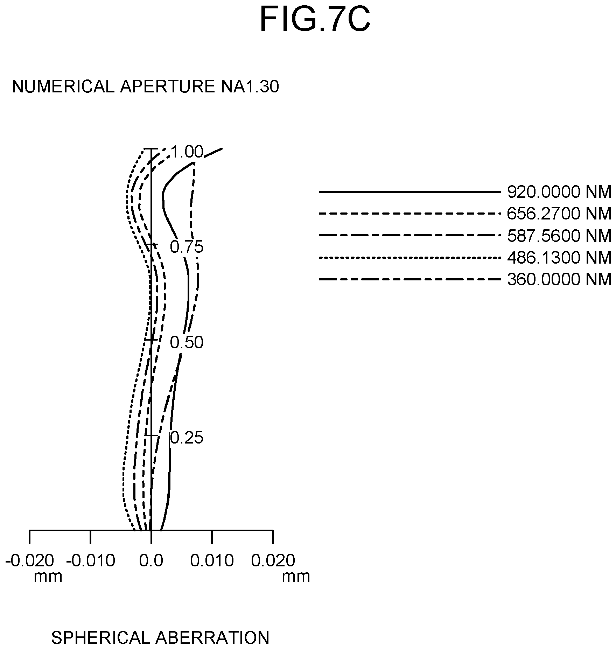

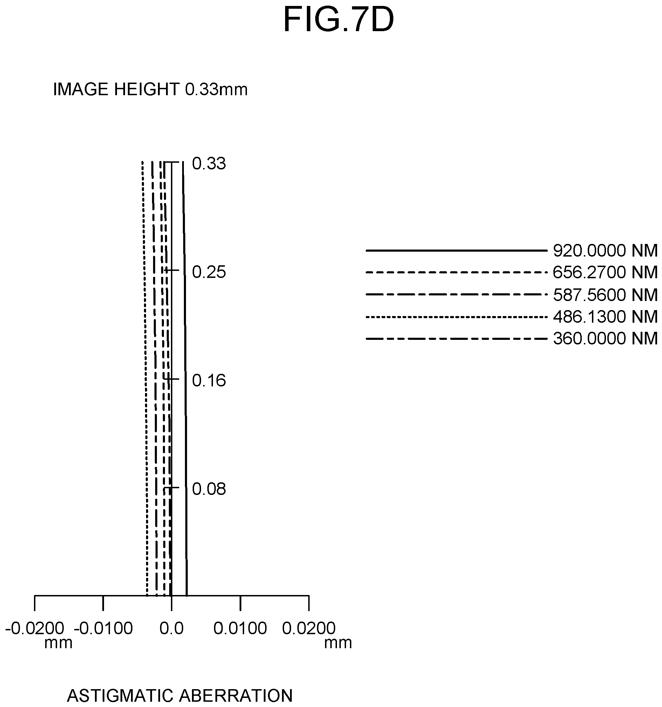

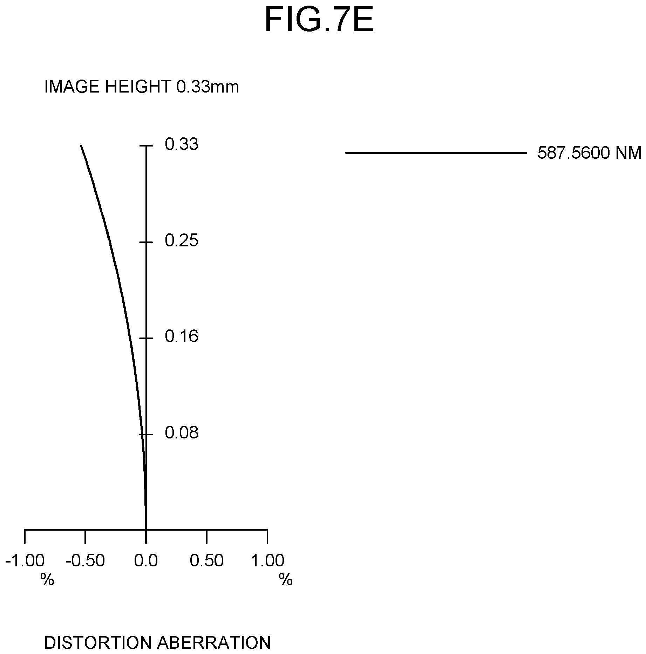

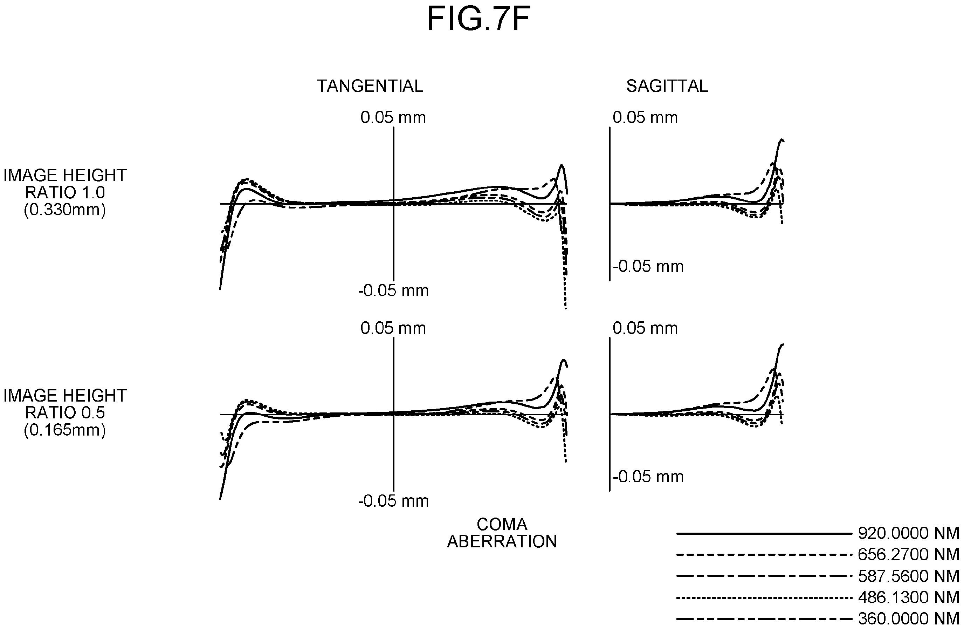

Next, Example 2 will be described with reference to FIGS. 7A to 7F. FIG. 7A is a cross-sectional view of the objective lens 300 in Example 2, and FIG. 7B is lens data of the objective lens 300 in Example 2. FIGS. 7C to 7E are aberration diagrams of the objective lens in Example 2, and are longitudinal aberration diagrams on the object surface when reverse ray tracing that traces an infinite beam entering from an image side toward an object side is performed. Specifically, FIG. 7C illustrates spherical aberration, FIG. 7D illustrates astigmatic aberration, and FIG. 7E illustrates distortion aberration. Further, FIG. 7F is an aberration diagram of the objective lens 300 in Example 2, and is a lateral aberration diagram on the object surface when reverse ray tracing that traces the infinite beam entering from the image side toward the object side is performed.

In Example 2, the lens data in FIG. 7B was applied to the objective lens 300 having the configuration illustrated in FIG. 7A, and optical simulation was performed. In the lens data of FIG. 7B, a surface indicated by a surface number s28 corresponds to the lens surface closest to the image side. Then, results of aberrations illustrated in FIGS. 7C to 7F were obtained.

As illustrated in FIGS. 7C to 7F, optical simulation was performed with light having wavelengths of 360.0000 nm, 404.4661 nm, 435.8300 nm, 486.1300 nm, 546.0700 nm, 587.5600 nm, 656.2700 nm, and 920.0000 nm. As illustrated in FIGS. 7C to 7F, it was found that, in the objective lens 300 according to Example 2, variation in the focal point (aberration) was suppressed in a wide wavelength range. In other words, the chromatic aberration has been improved. In FIGS. 7C, 7D, and 7F, only a part of the results obtained by optical simulation is illustrated for easy understanding.

<3.3 Example 3>

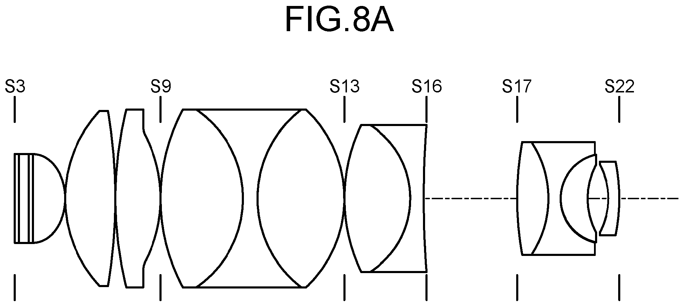

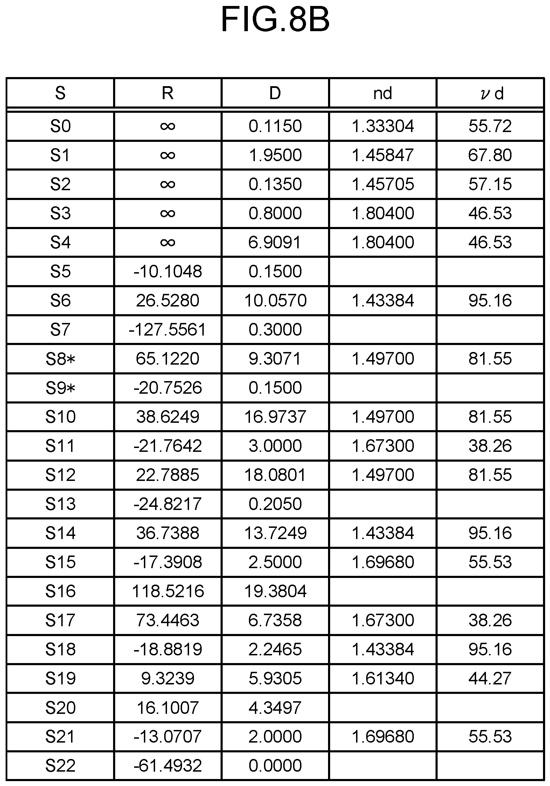

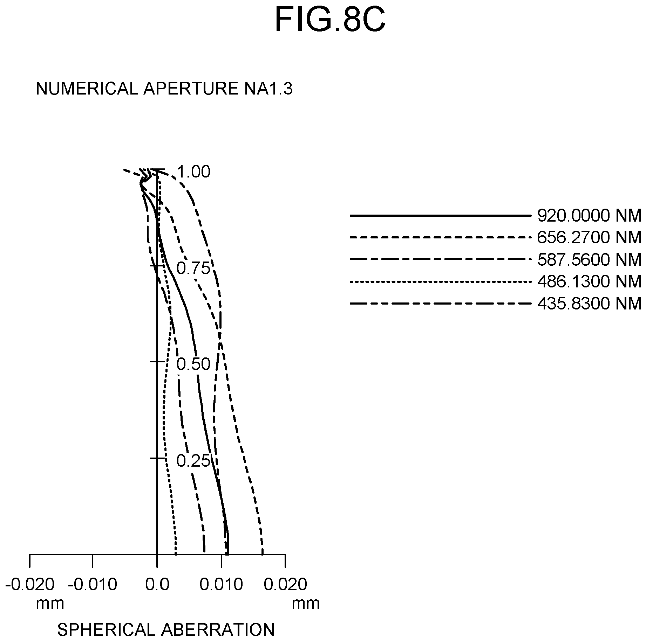

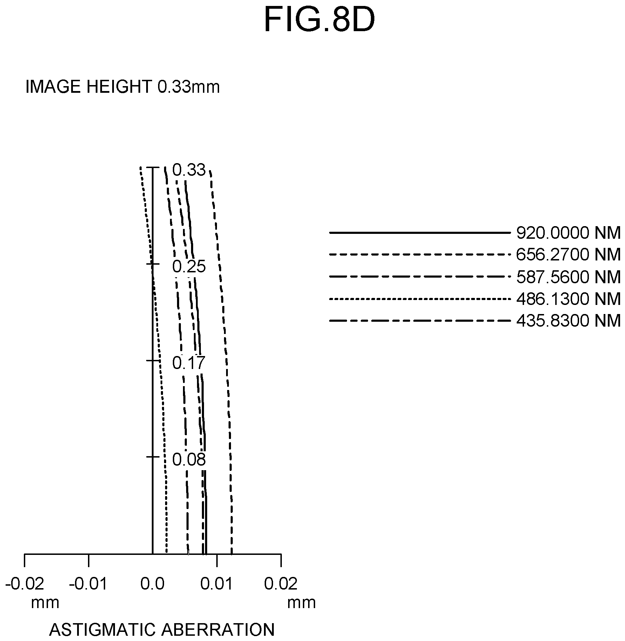

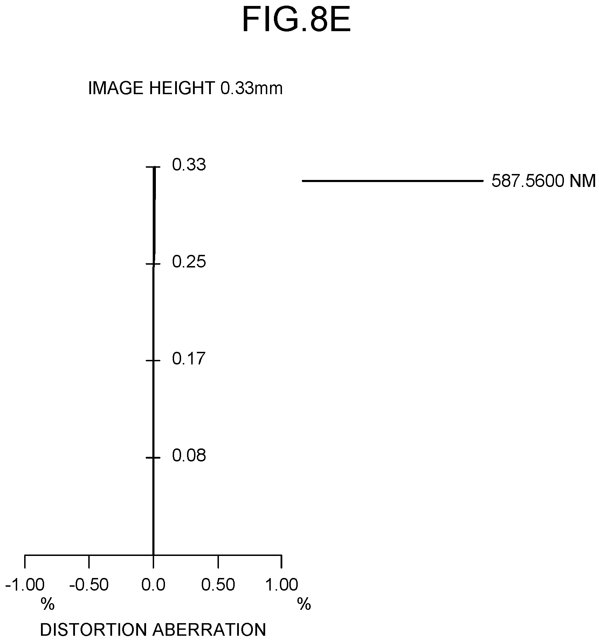

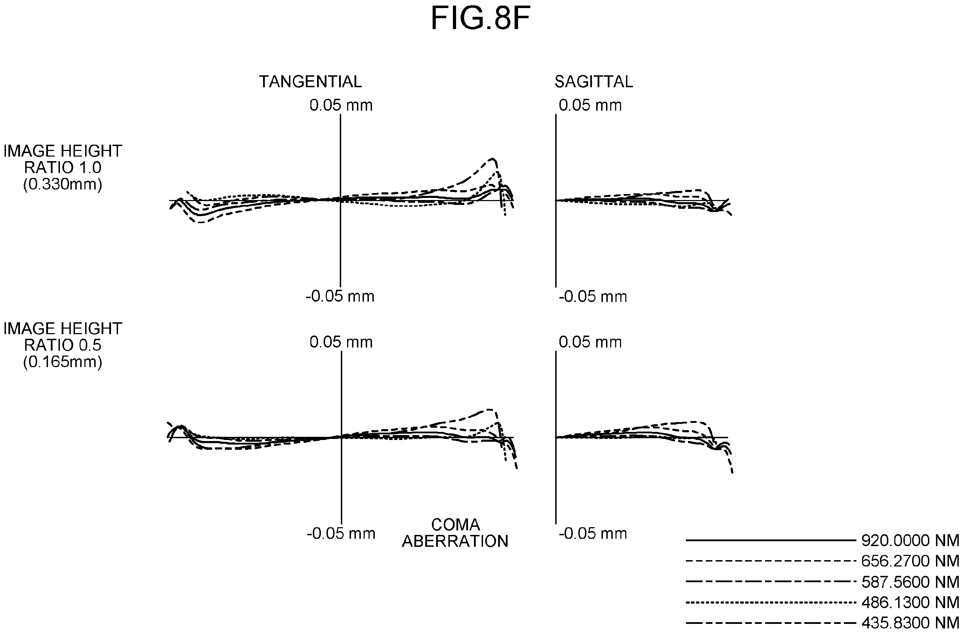

Next, Example 3 will be described with reference to FIGS. 8A to 8F. FIG. 8A is a cross-sectional view of the objective lens 300 in Example 3, and FIG. 8B is lens data of the objective lens 300 in Example 3. FIGS. 8C to 8E are aberration diagrams of the objective lens in Example 3, and are longitudinal aberration diagrams on the object surface when reverse ray tracing that traces an infinite beam entering from an image side toward an object side is performed. Specifically, FIG. 8C illustrates spherical aberration, FIG. 8D illustrates astigmatic aberration, and FIG. 8E illustrates distortion aberration. Further, FIG. 8F is an aberration diagram of the objective lens 300 in Example 3, and is a lateral aberration diagram on the object surface when reverse ray tracing that traces the infinite beam entering from the image side toward the object side is performed.

In Example 3, the lens data illustrated in FIG. 8B was applied to the objective lens 300 having the configuration illustrated in FIG. 8A, and optical simulation was performed. In the lens data of FIG. 8B, a surface indicated by a surface number s22 corresponds to the lens surface closest to the image side. Note that, in the lens data of FIG. 8B, the * mark next to the surface number indicates that the surface is an aspheric surface. In other words, the lens configured with surface numbers s8 and s9 is an aspheric lens.

In addition, the aspheric shape of the aspheric lens in Example 3 is expressed by the following Expression (9) .

$$z = \frac{\dfrac{h^2}{r}}{1 + \sqrt{1 - \dfrac{(1+k)h^2}{r^2}}} + Ah^4 + Bh^6 + Ch^8 \qquad \cdots (9)$$

In Expression (9), Z denotes a coordinate of the aspheric surface in a direction of the optical axis, h denotes a coordinate of the aspheric surface in a direction orthogonal to the optical axis, k denotes a conic constant, and r denotes a paraxial curvature radius of the aspheric surface. In addition, in Expression (9), A, B, and C denote fourth-order, sixth-order, and eighth-order aspheric coefficients, respectively.

In Example 3, aspheric shapes of surface numbers s8 and s9 are represented by the following coefficients.

s8:k = 0, A = -2.73262E-07, B = 7.86430E-10, C = -3.40866E-11
s9: k = 0, A = 2.78766E-05, B = 9.44599E-08, C = 5.87665E-11

Note that E denotes a power of 10.
Results of aberrations as illustrated in FIGS. 8C to 8F were obtained. Specifically, as illustrated in FIGS. 8C to 8F, optical simulation was performed with light having wavelengths of 360.0000 nm, 404.4661 nm, 435.8300 nm, 486.1300 nm, 546.0700 nm, 587.5600 nm, 656.2700 nm, and 920.0000 nm. As illustrated in FIGS. 8C to 8F, it was found that, in the objective lens 300 according to Example 3, variation in the focal point (aberration) was suppressed in a wide wavelength range. In other words, the chromatic aberration has been improved. In Example 3, the aspheric lens has an aspheric shape in which the positive refractive power is weakened as a distance from the optical axis increases. This makes it possible to satisfactorily correct higher-order spherical aberration and coma aberration. Furthermore, according to Example 3, since the number of lenses configuring the objective lens 300 can be further reduced as compared with Examples 1 and 2 described above, an increase in manufacturing cost can be suppressed. In FIGS. 8C, 8D, and 8F, only a part of the results obtained by optical simulation is illustrated for easy understanding.

<3.4 Example 4>

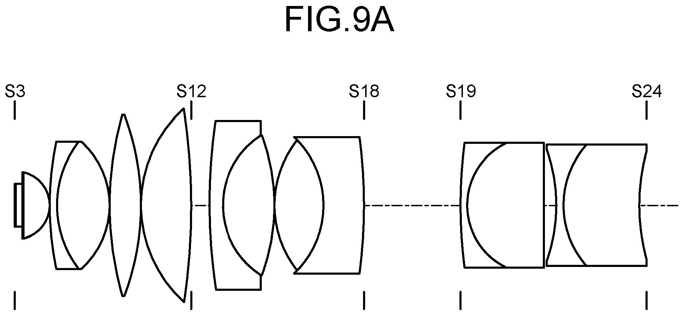

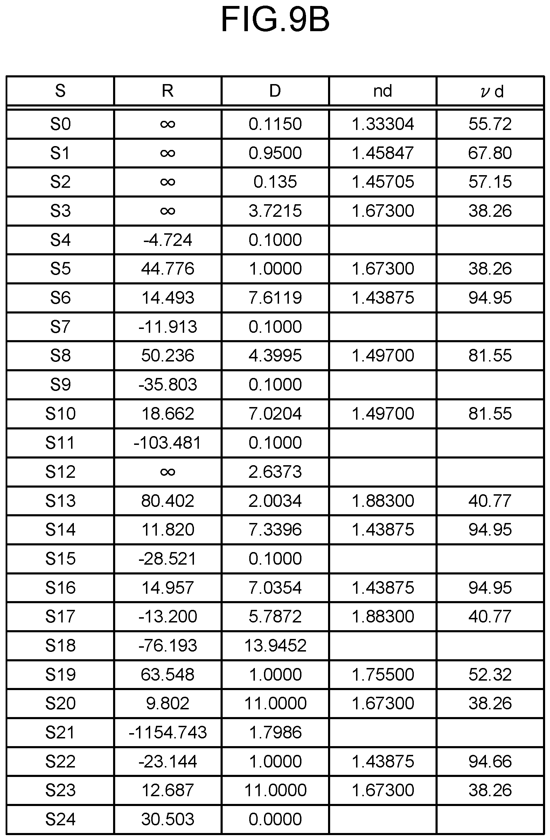

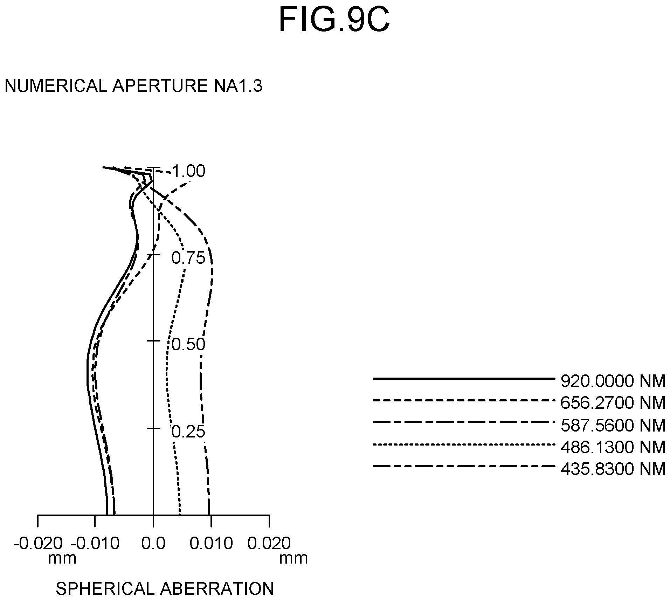

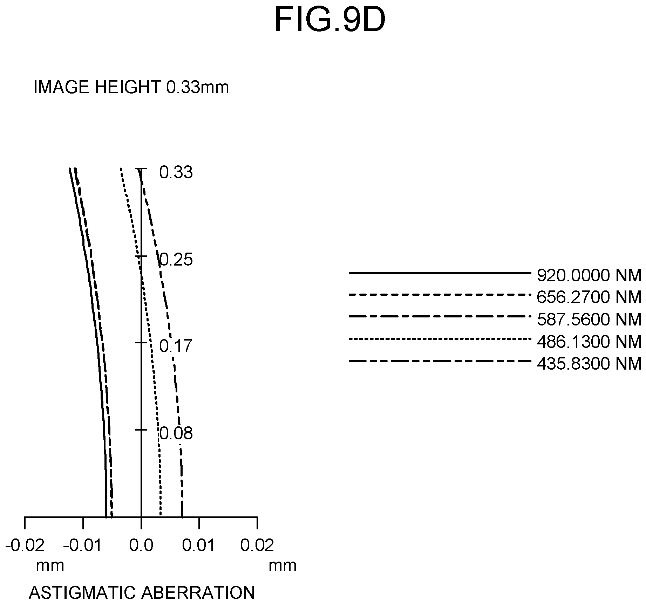

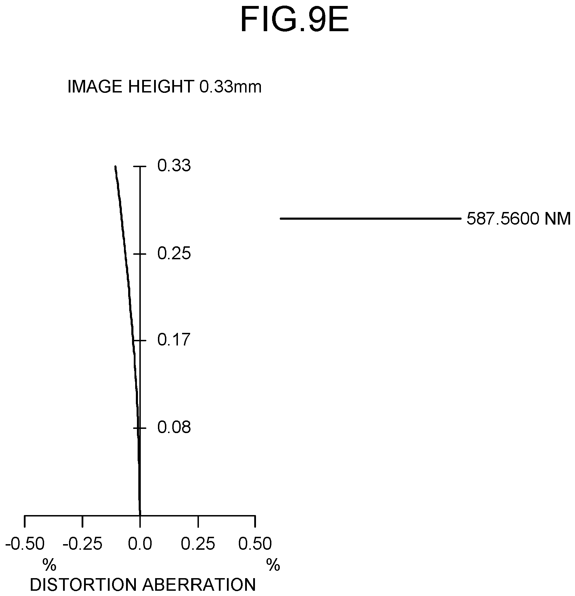

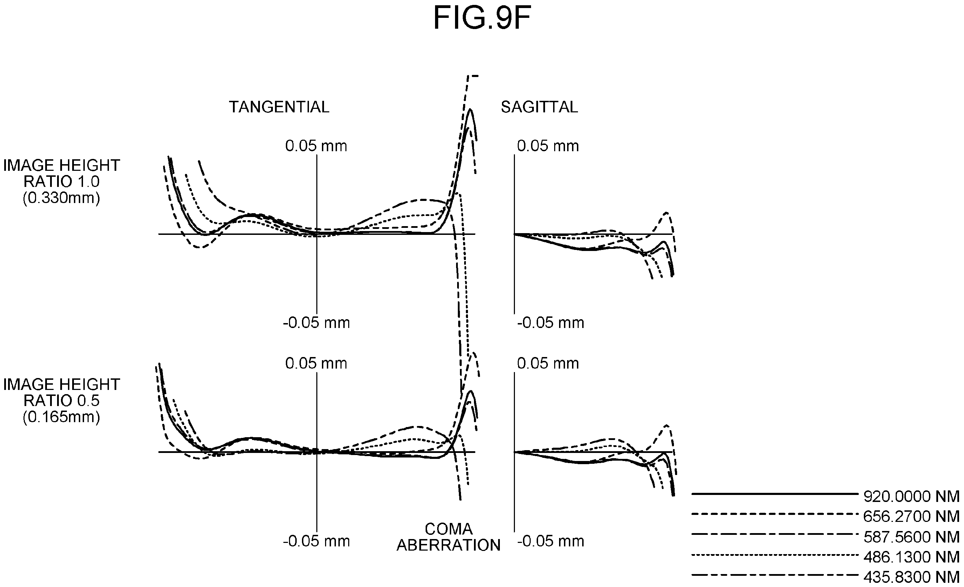

Further, Example 3 will be described with reference to FIGS. 9A to 9F. FIG. 9A is a cross-sectional view of the objective lens 300 in Example 4, and FIG. 9B is lens data of the objective lens 300 in Example 4. FIGS. 9C to 9E are aberration diagrams of the objective lens in Example 4, and are longitudinal aberration diagrams on the object surface when reverse ray tracing that traces an infinite beam entering from an image side toward an object side is performed. Specifically, FIG. 9C illustrates spherical aberration, FIG. 9D illustrates astigmatic aberration, and FIG. 9E illustrates distortion aberration. Further, FIG. 9F is an aberration diagram of the objective lens 300 in Example 4, and is a lateral aberration diagram on the object surface when reverse ray tracing that traces the infinite beam entering from the image side toward the object side is performed.

In Example 4, the lens data in FIG. 9B was applied to the objective lens 300 having the configuration illustrated in FIG. 9A, and optical simulation was performed. In the lens data of FIG. 9B, a surface indicated by a surface number s24 corresponds to the lens surface closest to the image side. Then, results of aberrations illustrated in FIGS. 9C to 9F were obtained.

As illustrated in FIGS. 9C to 9F, optical simulation was performed with light having wavelengths of 360.0000 nm, 404.4661 nm, 435.8300 nm, 486.1300 nm, 546.0700 nm, 587.5600 nm, 656.2700 nm, and 920.0000 nm. As illustrated in FIGS. 9C to 9F, it was found that, in the objective lens 300 according to Example 4, variation in the focal point (aberration) was suppressed in a wide wavelength range. In other words, the chromatic aberration has been improved. In FIGS. 9C, 9D, and 9F, only a part of the results obtained by optical simulation is illustrated for easy understanding.

<<4. Summary>>

As described above, according to the embodiment of the present disclosure, it is possible to secure the rigidity of the flow channel C while supporting the detection of light in a wide wavelength range, and to downsize the sample analyzer 100 and various optical components configuring the sample analyzer 100.

<<5. Supplement>>

Although the preferred embodiment of the present disclosure has been described in detail with reference to the accompanying drawings, the technical scope of the present disclosure is not limited to these examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. In other words, the technology according to the present disclosure can exhibit other effects obvious to those skilled in the art from the description of the present specification in addition to or instead of the above effects.

The present technology can also have the following configurations.

(1) An objective lens used in a sample analyzer for detecting light in a plurality of wavelength bands from particles flowing through a flow channel, in which

the objective lens is provided in proximity to the flow channel, and
the objective lens has a ratio of a converted optical path length L to a focal length f of the objective lens in a dry system satisfying Mathematical Expression (1) below, where the converted optical path length L denotes a distance from a lens surface on a flow channel side to a center of the flow channel converted into a distance in the dry system:

$$0.15 \leq L/f \leq 0.45 \qquad \cdots (1)$$

(2) The objective lens of the above (1), in which

the objective lens includes a positive lens located closest to the flow channel, and a refractive index $n_d$ and an Abbe number $v_d$ of the positive lens satisfy Mathematical Expressions (2) and (3) below:

$$1.67 < n_d < 1.81 \qquad \cdots (2)$$

$$38 < v_d \qquad \cdots (3)$$

where $n_d$ in Mathematical Expression (2) denotes a refractive index at a d-line, and $v_d$ in Mathematical Expression (3) denotes an Abbe number at the d-line.

(3) The objective lens of the above (2), in which

the objective lens includes positive lenses, and a refractive index $n_d$, an Abbe number $v_d$, and a partial dispersion ratio $P_gF$ of three or more of the positive lenses satisfy Mathematical Expressions (4), (5), and (6) below:

$$n_d < 1.52 \qquad \cdots (4)$$

$$79 < v_d \qquad \cdots (5)$$

$$P_gF < 0.54 \qquad \cdots (6)$$

where $n_d$ in Mathematical Expression (4) denotes the refractive index at the d-line, and $v_d$ in Mathematical Expression (5) denotes the Abbe number at the d-line.

(4) The objective lens of the above (3), in which

the objective lens includes negative lenses, and a refractive indexes $n_d$ and an Abbe numbers $v_d$ of three or more of the negative lenses satisfy Mathematical Expressions (7) and (8) below:

$$n_d < 1.78 \qquad \cdots (7)$$

$$29 < v_d \qquad \cdots (8)$$

where $n_d$ in Mathematical Expression (7) denotes the refractive index at the d-line, and $v_d$ in Mathematical Expression (8) denotes the Abbe number at the d-line.

(5) The objective lens of the above (4), in which the objective lens includes an aspheric lens having an aspheric shape represented by Expression (9) below:

$$z = \frac{\dfrac{h^2}{r}}{1 + \sqrt{1 - \dfrac{(1+k)h^2}{r^2}}} + Ah^4 + Bh^6 + Ch^8 \qquad \cdots (9)$$

in Expression (9), Z denotes a coordinate of the aspheric surface in a direction of the optical axis, h denotes a coordinate of the aspheric surface in a direction orthogonal to the optical axis, k denotes a conic constant, and r denotes a paraxial curvature radius of the aspheric surface. In addition, in Expression (9), A, B, and C denote fourth-order, sixth-order, and eighth-order aspheric coefficients, respectively.

(6) The objective lens of any one of the above (1) to (5), in which the objective lens is an infinite conjugate lens.

(7) A sample analyzer including:

an objective lens that condenses light generated by irradiating particles flowing through a flow channel with light;
a detection unit that detects light from the objective lens; and
a detection optical system that guides emission light from the objective lens to the detection unit, in which
the objective lens is provided in proximity to the flow channel, and
the objective lens has a ratio of a converted optical path length L to a focal length f of the objective lens in a dry system satisfying Mathematical Expression (1) below, where the converted optical path length L denotes a distance from a lens surface on a flow channel side to a center of the flow channel converted into a distance in the dry system:

$$0.15 \leq L/f \leq 0.45 \qquad \cdots (1)$$

(8) The sample analyzer of the above (7), further including a light irradiation unit that irradiates the particles flowing through the flow channel with light in a plurality of different wavelength bands.

(9) Thee sample analyzer of the above (8), in which the particles are labeled with a fluorescent dye.

(10) The sample analyzer of the above (7), in which the detection unit detects light having a wavelength of 360 nm to 920 nm.

(11) The sample analyzer of the above (10), in which
the detection unit includes a plurality of detectors that detect light in different wavelength bands.

(12) The sample analyzer of the above (11), in which the detection optical system includes an imaging lens.

(13) The sample analyzer of the above (12), in which the detection optical system includes a notch filter.

(14) The sample analyzer of the above (12) or (13), in which the detection optical system includes a dichroic mirror, a prism, or a diffraction grating.

(15) The sample analyzer of any one of the above (12) to (14), in which the detection optical system includes a relay lens.

(16) The sample analyzer of any one of the above (7) to (15), further including a sorting unit that sorts the particles based on a detection result of the detection unit.

(17) The sample analyzer of any one of the above (7) to (16), further including an information processing unit that processes detection data from the detection unit.

Reference Signs List

100 SAMPLE ANALYZER
101 LIGHT IRRADIATION UNIT
102, 102a DETECTION UNIT
103 INFORMATION PROCESSING UNIT
104 SORTING UNIT
200, 200a DETECTION OPTICAL SYSTEM

300, 300a OBJECTIVE LENS
400 IMAGING LENS
402 DICHROIC MIRROR
404a, 404b RELAY LENS
406 NOTCH FILTER
500 LIGHT DETECTOR
502 UV DETECTOR
510 FSC DETECTOR
C FLOW CHANNEL
L IRRADIATION LIGHT
M FORWARD SCATTERED LIGHT
P FINE PARTICLE
S SAMPLE

**Claims**

1. An objective lens used in a sample analyzer that detects light in a plurality of wavelength bands from particles flowing through a flow channel, wherein

   the objective lens is provided in proximity to the flow channel, and
   the objective lens has a ratio of a converted optical path length L to a focal length f of the objective lens in a dry system satisfying Mathematical Expression (1) below, where the converted optical path length L denotes a distance from a lens surface on a side of the flow channel to a center of the flow channel converted into a distance in the dry system:

$$0.15 \leq L/f \leq 0.45 \qquad \cdots (1)$$

2. The objective lens according to claim 1, wherein

   the objective lens includes a positive lens located closest to the flow channel, and a refractive index $n_d$ and an Abbe number $v_d$ of the positive lens satisfy Mathematical Expressions (2) and (3) below:

$$1.67 < n_d < 1.81 \qquad \cdots (2)$$

$$38 < v_d \qquad \cdots (3)$$

   where $n_d$ in Mathematical Expression (2) denotes a refractive index at a d-line and $v_d$ in Mathematical Expression (3) denotes an Abbe number at the d-line.

3. The objective lens according to claim 2, wherein

   the objective lens includes positive lenses, and a refractive index $n_d$, an Abbe number $v_d$, and a partial dispersion ratio $P_gF$ of three or more of the positive lenses satisfy Mathematical Expressions (4), (5), and (6) below:

$$n_d < 1.52 \qquad \cdots (4)$$

$$79 < v_d \qquad \cdots (5)$$

$$P_gF < 0.54 \qquad \cdots (6)$$

   where $n_d$ in Mathematical Expression (4) denotes the refractive index at the d-line and $v_d$ in Mathematical Expression (5) denotes the Abbe number at the d-line.

4. The objective lens according to claim 3, wherein

the objective lens includes negative lenses, and a refractive index $n_d$ and an Abbe number $v_d$ of three or more of the negative lenses satisfy Mathematical Expressions (7) and (8) below:

$$n_d < 1.78 \qquad \cdots (7)$$

$$29 < v_d \qquad \cdots (8)$$

where $n_d$ in Mathematical Expression (7) denotes the refractive index at the d-line and $v_d$ in Mathematical Expression (8) denotes the Abbe number at the d-line.

5. The objective lens according to claim 4, wherein the objective lens includes an aspheric lens having an aspheric shape represented by Expression (9) below:

$$z = \frac{\dfrac{h^2}{r}}{1 + \sqrt{1 - \dfrac{(1+k)h^2}{r^2}}} + Ah^4 + Bh^6 + Ch^8 \qquad \cdots (9)$$

in Expression (9), Z denotes a coordinate of an aspheric surface in a direction of an optical axis, h denotes a coordinate of the aspheric surface in a direction orthogonal to the optical axis, k denotes a conic constant, r denotes a paraxial curvature radius of the aspheric surface, and A, B, and C in Expression (9) denote fourth-order, sixth-order, and eighth-order aspheric coefficients, respectively.

6. The objective lens according to claim 1, wherein the objective lens is an infinite conjugate lens.

7. A sample analyzer comprising:

an objective lens that condenses light generated by irradiating particles flowing through a flow channel with light;
a detection unit that detects light from the objective lens; and
a detection optical system that guides emission light from the objective lens to the detection unit, wherein
the objective lens is provided in proximity to the flow channel, and
the objective lens has a ratio of a converted optical path length L to a focal length f of the objective lens in a dry system satisfying Mathematical Expression (1) below, where the converted optical path length L is a distance from a lens surface on a side of the flow channel to a center of the flow channel converted into a distance in the dry system:

$$0.15 \le L/f \le 0.45 \qquad \cdots (1)$$

8. The sample analyzer according to claim 7, further comprising a light irradiation unit that irradiates the particles flowing through the flow channel with light in a plurality of different wavelength bands.

9. The sample analyzer according to claim 8, wherein the particles are labeled with a fluorescent dye.

10. The sample analyzer according to claim 7, wherein the detection unit detects light having a wavelength of 360 nm to 920 nm.

11. The sample analyzer according to claim 10, wherein
the detection unit includes a plurality of detectors that detect light in different wavelength bands.

**12.** The sample analyzer according to claim 11, wherein the detection optical system includes an imaging lens.

**13.** The sample analyzer according to claim 12, wherein the detection optical system includes a notch filter.

**14.** The sample analyzer according to claim 12, wherein the detection optical system includes a dichroic mirror, a prism, or a diffraction grating.

**15.** The sample analyzer according to claim 12, wherein the detection optical system includes a relay lens.

**16.** The sample analyzer according to claim 7, further comprising a sorting unit that sorts the particles based on a detection result of the detection unit.

**17.** The sample analyzer according to claim 7, further comprising an information processing unit that processes detection data from the detection unit.

# FIG.1

S

P

C

101

LIGHT
IRRADIA-
TION UNIT

100

102

DETECTION
UNIT

103

INFORMA-
TION
PROCESS-
ING UNIT

104

SORTING
UNIT

# FIG.2

102a

300a

C

P

OBJEC-
TIVE
LENS

500

LIGHT
DETECTOR

200a

FIG.3

102

200

300 OBJECTIVE LENS

400

500 SSC DETECTOR / FLUORESCENCE DETECTOR

510 FSC DETECTOR

M

C

P

L

# FIG.4

EP 4 375 724 A1

# FIG.5

| EXAMPLE | 1 | 2 | 3 | 4 |
|---|---|---|---|---|
| AIR CONVERSION OPTICAL PATH LENGTH L[mm] | 1.514984 | 1.514984 | 1.515942 | 0.83029 |
| FOCAL LENGTH IN DRY OBJECTIVE LENS f[mm] | 4.100 | 4.100 | 4.092 | 4.095 |
| L/f | 0.370 | 0.370 | 0.370 | 0.203 |

FIG.6A

## FIG.6B

| S | R | D | nd | $\nu$ d |
|---|---|---|---|---|
| S0 (OBJECT SURFACE) | ∞ | 0.1000 | 1.33304 | 55.72 |
| S1 | ∞ | 1.9500 | 1.45847 | 67.80 |
| S2 | ∞ | 0.1500 | 1.45705 | 57.15 |
| S3 | ∞ | 7.7291 | 1.78800 | 47.37 |
| S4 | -9.5383 | 0.1500 | | |
| S5 | 277.5098 | 1.7500 | 1.67300 | 38.26 |
| S6 | 23.6489 | 14.6551 | 1.53775 | 74.70 |
| S7 | -23.4276 | 0.1500 | | |
| S8 | -118.4740 | 4.4424 | 1.75500 | 52.32 |
| S9 | -44.8536 | -0.7000 | | |
| S10 (DIAPHRAGM SURFACE) | ∞ | 1.0000 | | |
| S11 | 26.4865 | 8.9156 | 1.43875 | 94.95 |
| S12 | 54.1326 | 2.7500 | 1.75500 | 52.32 |
| S13 | 20.3492 | 16.1343 | 1.43875 | 94.95 |
| S14 | -84.1978 | 0.1500 | | |
| S15 | 53.2631 | 2.5000 | 1.75500 | 52.32 |
| S16 | 18.3105 | 13.3270 | 1.43875 | 94.95 |
| S17 | -76.0026 | 0.1500 | | |
| S18 | 25.8380 | 2.5000 | 1.61340 | 1.44 |
| S19 | 15.2591 | 12.0389 | 1.43875 | 94.95 |
| S20 | 800.8568 | 0.1500 | | |
| S21 | 28.5052 | 2.7000 | 1.67300 | 38.26 |
| S22 | 14.9683 | 11.0000 | 1.53775 | 74.70 |
| S23 | -61.8967 | 4.0000 | 1.75500 | 52.32 |
| S24 | 22.2189 | 3.2837 | | |
| S25 | -48.1231 | 5.3211 | 1.61340 | 1.44 |
| S26 | -11.2572 | 1.6287 | 1.43875 | 94.95 |
| S27 | 21.0870 | 1.4657 | | |
| S28 | 81.2564 | 5.3998 | 1.67300 | 38.26 |
| S29 | -13.1396 | 1.5000 | 1.43875 | 94.95 |
| S30 | 37.8076 | 2.5085 | | |
| S31 | -20.7459 | 1.2000 | 1.43875 | 94.95 |
| S32 | 58.8018 | 0.0000 | | |

# FIG.6C

NUMERICAL APERTURE NA1.30

| | |
|---|---|
| ——————— | 920.0000 NM |
| - - - - - - - - - - - | 656.2700 NM |
| — — — — — — | 587.5600 NM |
| ················· | 486.1300 NM |
| — - — - — - — | 360.0000 NM |

-0.020  -0.010  0.0  0.010  0.020
  mm                        mm

SPHERICAL ABERRATION

# FIG.6D

IMAGE HEIGHT 0.33mm

| | 920.0000 NM |
| | 656.2700 NM |
| | 587.5600 NM |
| | 486.1300 NM |
| | 360.0000 NM |

ASTIGMATIC ABERRATION

# FIG.6E

IMAGE HEIGHT 0.33mm

——————————— 587.5600 NM

-0.33

-0.24

-0.16

-0.08

-1.00   -0.50   0.0   0.50   1.00
%                           %

DISTORTION ABERRATION

# FIG.6F

TANGENTIAL       SAGITTAL

IMAGE HEIGHT
RATIO 1.0
(0.330mm)

0.05 mm     0.05 mm

-0.05 mm     -0.05 mm

IMAGE HEIGHT
RATIO 0.5
(0.165mm)

0.05 mm     0.05 mm

-0.05 mm     -0.05 mm

COMA
ABERRATION

—————— 920.0000 NM
------------ 656.2700 NM
— — — — — 587.5600 NM
·············· 486.1300 NM
— - — - — - — 360.0000 NM

EP 4 375 724 A1

# FIG.7A

EP 4 375 724 A1

# FIG.7B

| S | R | D | nd | $\nu$ d |
|---|---|---|---|---|
| S0 | ∞ | 0.1000 | 1.33304 | 55.72 |
| S1 | ∞ | 1.9500 | 1.45847 | 67.80 |
| S2 | ∞ | 0.1500 | 1.45705 | 57.15 |
| S3 | ∞ | 6.1521 | 1.75500 | 52.32 |
| S4 | -9.3283 | 0.1500 | | |
| S5 | 362.4602 | 2.0000 | 1.67300 | 38.26 |
| S6 | 27.3484 | 14.7442 | 1.53775 | 74.70 |
| S7 | -21.0584 | 0.1500 | | |
| S8 | -50876.7612 | 6.5558 | 1.75500 | 52.32 |
| S9 | -43.3071 | -2.1000 | | |
| S10 | ∞ | 2.4000 | | |
| S11 | 32.7099 | 14.4628 | 1.43875 | 94.95 |
| S12 | -37.4659 | 2.7500 | 1.75500 | 52.32 |
| S13 | 47.6707 | 9.7045 | 1.43875 | 94.95 |
| S14 | -48.0573 | 0.1500 | | |
| S15 | 45.3555 | 2.5000 | 1.75500 | 52.32 |
| S16 | 19.0189 | 13.2954 | 1.43875 | 94.95 |
| S17 | -64.2805 | 0.1500 | | |
| S18 | 46.6223 | 9.9649 | 1.43875 | 94.95 |
| S19 | -22.5165 | 2.0000 | 1.75500 | 52.32 |
| S20 | -640.6329 | 0.1500 | | |
| S21 | 15.9553 | 14.1566 | 1.43875 | 94.95 |
| S22 | -27.0864 | 12.0047 | 1.51633 | 64.14 |
| S23 | 12.4459 | 3.7761 | | |
| S24 | -14.4991 | 1.2000 | 1.43875 | 94.95 |
| S25 | 11.0186 | 5.9561 | | |
| S26 | -12.0282 | 1.2000 | 1.43875 | 94.95 |
| S27 | 31.1457 | 4.3267 | 1.67300 | 38.26 |
| S28 | -18.6111 | 0.0000 | | |

# FIG.7C

NUMERICAL APERTURE NA1.30

| | |
|---|---|
| ——————— | 920.0000 NM |
| - - - - - - - - - | 656.2700 NM |
| — - — - — - — · | 587.5600 NM |
| ············· | 486.1300 NM |
| – – – – – – – – | 360.0000 NM |

-0.020  -0.010   0.0    0.010   0.020
  mm                              mm

SPHERICAL ABERRATION

# FIG.7D

IMAGE HEIGHT 0.33mm

ASTIGMATIC ABERRATION

# FIG.7E

IMAGE HEIGHT 0.33mm

——————————— 587.5600 NM

0.33

0.25

0.16

0.08

-1.00   -0.50   0.0   0.50   1.00
%                              %

DISTORTION ABERRATION

# FIG.7F

TANGENTIAL                    SAGITTAL

IMAGE HEIGHT
RATIO 1.0
(0.330mm)

0.05 mm                       0.05 mm

-0.05 mm                      -0.05 mm

IMAGE HEIGHT
RATIO 0.5
(0.165mm)

0.05 mm                       0.05 mm

-0.05 mm                      -0.05 mm

COMA
ABERRATION

——————————————— 920.0000 NM
- - - - - - - - - - - - 656.2700 NM
— — — — — — — — 587.5600 NM
···················· 486.1300 NM
— - — - — - — - — 360.0000 NM

EP 4 375 724 A1

# FIG.8A

# FIG.8B

| S | R | D | nd | $\nu$ d |
|---|---|---|---|---|
| S0 | ∞ | 0.1150 | 1.33304 | 55.72 |
| S1 | ∞ | 1.9500 | 1.45847 | 67.80 |
| S2 | ∞ | 0.1350 | 1.45705 | 57.15 |
| S3 | ∞ | 0.8000 | 1.80400 | 46.53 |
| S4 | ∞ | 6.9091 | 1.80400 | 46.53 |
| S5 | -10.1048 | 0.1500 | | |
| S6 | 26.5280 | 10.0570 | 1.43384 | 95.16 |
| S7 | -127.5561 | 0.3000 | | |
| S8* | 65.1220 | 9.3071 | 1.49700 | 81.55 |
| S9* | -20.7526 | 0.1500 | | |
| S10 | 38.6249 | 16.9737 | 1.49700 | 81.55 |
| S11 | -21.7642 | 3.0000 | 1.67300 | 38.26 |
| S12 | 22.7885 | 18.0801 | 1.49700 | 81.55 |
| S13 | -24.8217 | 0.2050 | | |
| S14 | 36.7388 | 13.7249 | 1.43384 | 95.16 |
| S15 | -17.3908 | 2.5000 | 1.69680 | 55.53 |
| S16 | 118.5216 | 19.3804 | | |
| S17 | 73.4463 | 6.7358 | 1.67300 | 38.26 |
| S18 | -18.8819 | 2.2465 | 1.43384 | 95.16 |
| S19 | 9.3239 | 5.9305 | 1.61340 | 44.27 |
| S20 | 16.1007 | 4.3497 | | |
| S21 | -13.0707 | 2.0000 | 1.69680 | 55.53 |
| S22 | -61.4932 | 0.0000 | | |

# FIG.8C

NUMERICAL APERTURE NA1.3

| | |
|---|---|
| ——————— | 920.0000 NM |
| - - - - - - - - - | 656.2700 NM |
| — - — - — - — - | 587.5600 NM |
| ·········· | 486.1300 NM |
| — — — — — — | 435.8300 NM |

-0.020  -0.010  0.0  0.010  0.020
mm                              mm

SPHERICAL ABERRATION

# FIG.8D

IMAGE HEIGHT 0.33mm

| | |
|---|---|
| ———————— | 920.0000 NM |
| -------------- | 656.2700 NM |
| — — — — — | 587.5600 NM |
| ················ | 486.1300 NM |
| — — — — — — | 435.8300 NM |

ASTIGMATIC ABERRATION

# FIG.8E

IMAGE HEIGHT 0.33mm

587.5600 NM

DISTORTION ABERRATION

FIG.8F

# FIG.9A

# FIG.9B

| S | R | D | nd | ν d |
|---|---|---|---|---|
| S0 | ∞ | 0.1150 | 1.33304 | 55.72 |
| S1 | ∞ | 0.9500 | 1.45847 | 67.80 |
| S2 | ∞ | 0.135 | 1.45705 | 57.15 |
| S3 | ∞ | 3.7215 | 1.67300 | 38.26 |
| S4 | -4.724 | 0.1000 | | |
| S5 | 44.776 | 1.0000 | 1.67300 | 38.26 |
| S6 | 14.493 | 7.6119 | 1.43875 | 94.95 |
| S7 | -11.913 | 0.1000 | | |
| S8 | 50.236 | 4.3995 | 1.49700 | 81.55 |
| S9 | -35.803 | 0.1000 | | |
| S10 | 18.662 | 7.0204 | 1.49700 | 81.55 |
| S11 | -103.481 | 0.1000 | | |
| S12 | ∞ | 2.6373 | | |
| S13 | 80.402 | 2.0034 | 1.88300 | 40.77 |
| S14 | 11.820 | 7.3396 | 1.43875 | 94.95 |
| S15 | -28.521 | 0.1000 | | |
| S16 | 14.957 | 7.0354 | 1.43875 | 94.95 |
| S17 | -13.200 | 5.7872 | 1.88300 | 40.77 |
| S18 | -76.193 | 13.9452 | | |
| S19 | 63.548 | 1.0000 | 1.75500 | 52.32 |
| S20 | 9.802 | 11.0000 | 1.67300 | 38.26 |
| S21 | -1154.743 | 1.7986 | | |
| S22 | -23.144 | 1.0000 | 1.43875 | 94.66 |
| S23 | 12.687 | 11.0000 | 1.67300 | 38.26 |
| S24 | 30.503 | 0.0000 | | |

# FIG.9C

NUMERICAL APERTURE NA1.3

SPHERICAL ABERRATION

—————— 920.0000 NM
- - - - - - - 656.2700 NM
— — — — — 587.5600 NM
············· 486.1300 NM
— · — · — · — 435.8300 NM

# FIG.9D

IMAGE HEIGHT 0.33mm

ASTIGMATIC ABERRATION

920.0000 NM
656.2700 NM
587.5600 NM
486.1300 NM
435.8300 NM

# FIG.9E

IMAGE HEIGHT 0.33mm

——————— 587.5600 NM

DISTORTION ABERRATION

FIG.9F

## INTERNATIONAL SEARCH REPORT

| International application No. |
|---|
| **PCT/JP2022/024507** |

| A. | CLASSIFICATION OF SUBJECT MATTER |
|---|---|

*G02B 21/02*(2006.01)i; *G01N 15/14*(2006.01)i; *G02B 13/18*(2006.01)i
FI: G02B21/02 A; G02B13/18; G01N15/14 D

According to International Patent Classification (IPC) or to both national classification and IPC

| B. | FIELDS SEARCHED |
|---|---|

Minimum documentation searched (classification system followed by classification symbols)

G02B21/02; G01N15/14; G02B13/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2010-8989 A (OLYMPUS CORP) 14 January 2010 (2010-01-14) examples 1-6 | 1-6 |
| Y | examples 1-6 | 7-17 |
| X | JP 60-209715 A (NIHON KOUGAKU KOGYO KK) 22 October 1985 (1985-10-22) examples 1-3 | 1-6 |
| Y | examples 1-3 | 7-17 |
| X | JP 2003-75724 A (OLYMPUS OPTICAL CO LTD) 12 March 2003 (2003-03-12) examples 1, 2, 4 | 1-6 |
| Y | examples 1, 2, 4 | 7-17 |
| Y | JP 2014-21274 A (HAMAMATSU PHOTONICS KK) 03 February 2014 (2014-02-03) paragraphs [0080]-[0082] | 7-17 |
| Y | JP 2021-76451 A (SONY CORPORATION) 20 May 2021 (2021-05-20) paragraphs [0009]-[0016], [0042], [0053], fig. 3 | 7-17 |

☑ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 August 2022** | **23 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/024507** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 104459967 A (CHANGCHUN OPTICS FINE MECH) 25 March 2015 (2015-03-25) paragraphs [0001]-[0003], claims | 7-17 |
| Y | JP 2015-145829 A (SONY CORPORATION) 13 August 2015 (2015-08-13) paragraphs [0066], [0067], [0071], [0088] | 13, 14 |
| Y | JP 2004-121143 A (SYSMEX CORP) 22 April 2004 (2004-04-22) claims, paragraphs [0027], [0048] | 9, 16 |

Form PCT/ISA/210 (second sheet) (January 2015)

**INTERNATIONAL SEARCH REPORT**
Information on patent family members

International application No.

**PCT/JP2022/024507**

| Patent document cited in search report | | | Publication date (day/month/year) | Patent family member(s) | | | Publication date (day/month/year) |
|---|---|---|---|---|---|---|---|
| JP | 2010-8989 | A | 14 January 2010 | US 2009/0027769 A1 embodiments 1-6 | | | |
| | | | | EP 2017663 A2 | | | |
| JP | 60-209715 | A | 22 October 1985 | (Family: none) | | | |
| JP | 2003-75724 | A | 12 March 2003 | (Family: none) | | | |
| JP | 2014-21274 | A | 03 February 2014 | (Family: none) | | | |
| JP | 2021-76451 | A | 20 May 2021 | (Family: none) | | | |
| CN | 104459967 | A | 25 March 2015 | (Family: none) | | | |
| JP | 2015-145829 | A | 13 August 2015 | (Family: none) | | | |
| JP | 2004-121143 | A | 22 April 2004 | US 2004/0067548 A1 claims, paragraphs [0050], [0089] | | | |
| | | | | EP 1405918 A1 | | | |
| | | | | DE 60312091 T2 | | | |
| | | | | AT 355387 T | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005501290 A
- JP 2011232259 A
- JP 2020076736 A